# EUROPEAN PATENT APPLICATION

(11) **EP 4 791 103 A1**
(43) Date of publication of application: **12.08.2026**
(21) Application number: 23954622.9
(22) Date of filing: 07.10.2023
(51) Int. Cl.: H04W 72/40

(54) **METHOD AND APPARATUS USED FOR SIDELINK COMMUNICATION**

(71) Applicant: Quectel Wireless Solutions Co., Ltd., Shanghai 201601 (CN)
(72) Inventor: LYU, Ling, Shanghai 201601 (CN); ZHAO, Zheng, Shanghai 201601 (CN)
(74) Representative: Fish & Richardson P.C.
(86) International application number: PCT/CN2023/123201
(87) International publication number: WO 2025/073109

(57) **Abstract**

A method and apparatus for sidelink communication are provided, which helps two or more terminal devices in a sidelink communication system to perform initial beam pairing based on the sidelink. The method includes the following. A first terminal device determines a first transmission beam from a plurality of transmission beams of a second terminal device, the first transmission beam being configured for initial beam pairing between the first terminal device and the second terminal device. The first terminal device transmits beam feedback to the second terminal device over a first resource, the first resource being determined according to first information, the first information being configured to indicate a mapping relationship between a plurality of resources including the first resource and the plurality of transmission beams, and the first information being further configured for the second terminal device to determine the first transmission beam.

## Description

### TECHNICAL FIELD

The various embodiments described in this document relate in general to the field of communication, and more specifically to a method and apparatus for sidelink communication.

### BACKGROUND

When communication is performed in relatively high frequency bands (such as, millimeter-wave bands), network devices can achieve system coverage through beam scanning based on large-scale antenna arrays. The beam scanning requires certain time-space resources and incurs large power consumption. Therefore, the network devices and terminal devices need to determine optimal transmit/receive beam pairs through beam pairing for uplink/downlink transmission.

In sidelink communication systems, when terminal devices perform initial beam pairing based on the sidelink, how to determine resources for beam feedback is a problem that needs to be solved.

### SUMMARY

Embodiments of the disclosure provide a method and apparatus for sidelink communication. The following describes various aspects related to the embodiments of the disclosure.

According to a first aspect, embodiments of the disclosure provide a method for sidelink communication. The method includes the following. A first terminal device determines a first transmission beam from a plurality of transmission beams of a second terminal device, where the first transmission beam is configured for initial beam pairing between the first terminal device and the second terminal device. The first terminal device transmits beam feedback to the second terminal device over a first resource, where the first resource is determined according to first information, the first information is configured to indicate a mapping relationship between a plurality of resources including the first resource and the plurality of transmission beams, and the first information is further configured for the second terminal device to determine the first transmission beam.

According to a second aspect, embodiments of the disclosure provide a method for sidelink communication. The method includes the following. A second terminal device transmits reference signals through a plurality of transmission beams, where the plurality of transmission beams are configured for a first terminal device to determine a first transmission beam, and the first transmission beam is configured for the first terminal device to perform initial beam pairing with the second terminal device. The second terminal device receives beam feedback transmitted by the first terminal device over a first resource, where the first resource is determined according to first information, the first information is configured to indicate a mapping relationship between a plurality of resources including the first resource and the plurality of transmission beams, and the first information is further configured for the second terminal device to determine the first transmission beam.

According to a third aspect, embodiments of the disclosure provide an apparatus for sidelink communication. The apparatus is a first terminal device and includes a determining unit and a transmitting unit. The determining unit is configured to determine a first transmission beam from a plurality of transmission beams of a second terminal device, where the first transmission beam is configured for initial beam pairing between the first terminal device and the second terminal device. The transmitting unit is configured to transmit beam feedback to the second terminal device over a first resource, where the first resource is determined according to first information, the first information is configured to indicate a mapping relationship between a plurality of resources including the first resource and the plurality of transmission beams, and the first information is further configured for the second terminal device to determine the first transmission beam.

According to a fourth aspect, embodiments of the disclosure provide an apparatus for sidelink communication. The apparatus is a second terminal device and includes a transmitting unit and a receiving unit. The transmitting unit is configured to transmit reference signals through a plurality of transmission beams, where the plurality of transmission beams are configured for a first terminal device to determine a first transmission beam, and the first transmission beam is configured for the first terminal device to perform initial beam pairing with the second terminal device. The receiving unit is configured to receive beam feedback transmitted by the first terminal device over a first resource, where the first resource is determined according to first information, the first information is configured to indicate a mapping relationship between a plurality of resources including the first resource and the plurality of transmission beams, and the first information is further configured for the second terminal device to determine the first transmission beam.

According to a fifth aspect, embodiments of the disclosure provide a communication apparatus, including a memory and a processor, where the memory is configured to store programs, and the processor is configured to invoke the programs in the memory to execute the method described in the first aspect or the second aspect.

According to a sixth aspect, embodiments of the disclosure provide an apparatus, including a processor configured to invoke a program from a memory, to cause the apparatus to perform the method described in the first aspect or the second aspect.

According to a seventh aspect, embodiments of the disclosure provide a chip, including a processor configured to invoke a program from a memory to cause a device in which the chip is installed to perform the method described in the first aspect or the second aspect.

According to an eight aspect, embodiments of the disclosure provide a computer-readable storage medium having stored thereon a program causing a computer to perform the method described in the first aspect or the second aspect.

According to a ninth aspect, embodiments of the disclosure provide a computer program product including a program causing a computer to perform the method described in the first aspect or the second aspect.

According to a tenth aspect, embodiments of the disclosure provide a computer program, and the computer program causes a computer to perform the method described in the first aspect or the second aspect.

In embodiments of the disclosure, after the first terminal device determines the first transmission beam for initial beam pairing with the second terminal device, the first terminal device can determine a first resource for transmitting beam feedback based on the first information. The first information is configured for indicating a correspondence between the plurality of transmission beams of the second terminal device and the plurality of resources. Therefore, the second terminal device can determine the transmission beam selected by the first terminal device based on the first resource corresponding to the received beam feedback, thereby enabling more effective beam pairing.

### BRIEF DESCRIPTION OF THE DRAWINGS

FIG. 1 is a wireless communication system to which embodiments of the present disclosure is applied.
FIG. 2 is a diagram illustrating an example of NR-V2X communication.
FIG. 3 is a schematic diagram of beam scanning performed by a transmitting terminal and a receiving terminal, respectively.
FIG. 4 is a schematic diagram of beam scanning where multiple transmitting terminals correspond to one receiving terminal.
FIG. 5 is a flow chart of a method for sidelink communication provided in embodiments of the disclosure.
FIG. 6 is a schematic diagram of periodic beam scanning performed by the second terminal device.
FIG. 7 is a schematic diagram of a possible mapping relationship between S-SSBs and FOs.
FIG. 8 is a schematic diagram of a possible mapping relationship between S-SSBs and resources occupied by FOs.
FIG. 9 is a schematic diagram of another possible mapping relationship between S-SSBs and resources occupied by FOs.
FIG. 10 is a flow chart of a possible implementation of the method shown in FIG. 5.
FIG. 11 is a structural diagram of an apparatus for sidelink communication provided in embodiments of the disclosure.
FIG. 12 is a structural diagram of an apparatus for sidelink communication provided in other embodiments of the disclosure.
FIG. 13 is a structural diagram of a communication apparatus provided in embodiments of the disclosure.

### DETAILED DESCRIPTION OF THE EMBODIMENTS

The following describes the technical solutions in the embodiments of the present disclosure in conjunction with the drawings in the embodiments of the present disclosure. Obviously, the described embodiments are some of embodiments of the present disclosure rather than all the embodiments. For the embodiments of the present disclosure, all other embodiments obtained by those of ordinary skill in the art without creative efforts fall within the protection scope of the present disclosure.

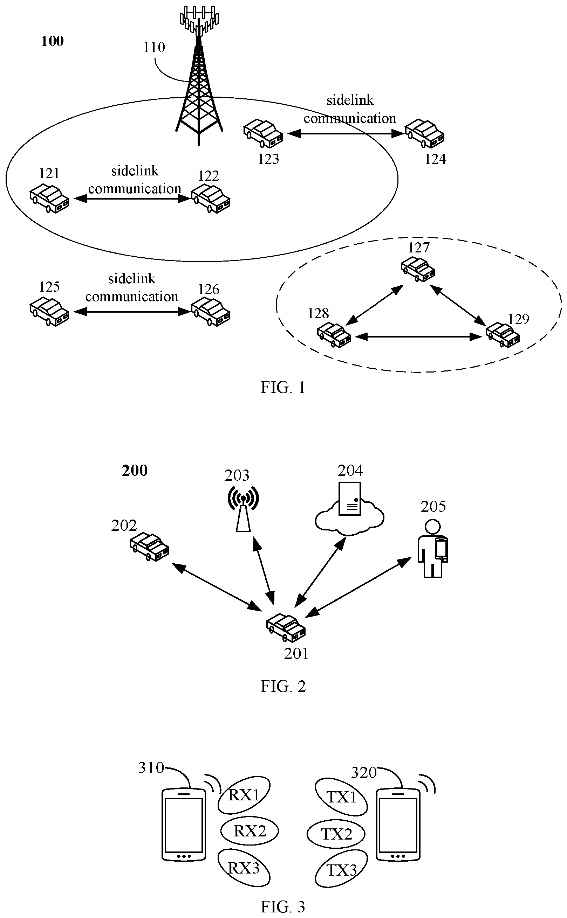

FIG. 1 is an example diagram of a system architecture of a wireless communication system 100 to which embodiments of the present disclosure are applicable. The wireless communication system 100 may include a network device 110 and terminal devices 121-129. The network device 110 can provide communication coverage for a particular geographic area, and can communicate with the terminals located within the coverage area.

In some implementations, the terminal devices can communicate with each other via a sidelink (SL). The sidelink communication may also be referred to as proximity service communication, one-sided communication, side link communication, device to device (D2D) communication, or the like.

In other words, the terminal devices can transmit sidelink data via the sidelink. The sidelink data can include data and/or control signaling. In some implementations, the sidelink data can be, for example, a physical sidelink control channel (PSCCH), a physical sidelink shared channel (PSSCH), a PSCCH demodulation reference signal (DMRS), a PSSCH DMRS, a physical sidelink feedback channel (PSFCH), and the like.

Several typical sidelink communication scenarios are described below in conjunction with FIG. 1. In sidelink communication, three primary scenarios can be defined according to whether the terminal devices in the sidelink are within the coverage of the network device. Scenario 1: the terminal devices engage in sidelink communication within the coverage area of the network device. Scenario 2, some terminal devices engage in sidelink communication within the coverage area of the network device. Scenario 3: the terminal devices engage in sidelink communication outside the coverage area of the network device.

As shown in FIG. 1, for scenario 1, the terminal devices 121, 122 can communicate through the sidelink, and the terminal devices 121, 122 are both within the coverage area of the network device 110. In other words, the terminal devices 121, 122 are both within the coverage of the same network device 110. In this scenario, the network device 110 can transmit configuration signaling to the terminal devices 121, 122, and accordingly, the terminal devices 121, 122 communicate through sidelink based on the configuration signaling.

As shown in FIG. 1, for scenario 2, the terminal devices 123, 124 can communicate through the sidelink, where the terminal device 123 is within the coverage of the network device 110, and the terminal device 124 is outside the coverage of the network device 110. In this scenario, the terminal device 123 receives the configuration information of the network device 110, and communicates through the sidelink based on the configuration of the configuration signaling. However, for the terminal device 124, since the terminal device 124 is outside the coverage of the network device 110, the terminal device 124 is not able to receive the configuration information of the network device 110. In this case, the terminal device 124 can obtain configuration for sidelink communication according to pre-configured configuration information and/or configuration information transmitted by the terminal device 123 within the coverage of the network device 110, so as to communicate with the terminal device 123 through the sidelink based on the obtained configuration.

In some cases, the terminal device 123 can transmit the above configuration information to the terminal device 124 through a physical sidelink broadcast channel (PSBCH) for configuring the terminal device 124 to communicate the terminal device 124 through the sidelink.

As shown in FIG. 1, for scenario 3, the terminal devices 125-129 are all outside the coverage of the network device 110 and are unable to communicate with the network device 110. In this case, the terminal devices can perform sidelink communication based on preconfigured configuration information.

In some cases, the terminal devices 127-129 that are outside the coverage of the network device can form a communication group, and the terminal devices 127-129 in the communication group can communicate with each other. In addition, the terminal device 127 in the communication group can serve as a central control node, also referred to as a cluster header (CH) terminal, and accordingly, other terminal devices in the communication group can be referred to as "cluster members".

It shall be noted that FIG. 1 exemplarily shows one network device and a plurality of terminal devices. Optionally, the wireless communication system 100 can include a plurality of network devices and each network device can include other numbers of terminal devices within the coverage of the network device, which is not limited in the embodiments of the present disclosure.

Optionally, the wireless communication system 100 can further include a network controller, a mobility management entity, and other network entities, which are not limited in the embodiments of the present disclosure.

It shall be understood that the technical solutions of the embodiments of the present disclosure can be applied to various communication systems, for example: a 5th generation (5G) system or a new radio (NR) system, a long term evolution (LTE) system, an LTE frequency division duplex (FDD) system, an LTE time division duplex (TDD) system, and the like. The technical solutions provided in the present disclosure can also be applied to future communication systems, such as a 6th generation mobile communication system, a satellite communication system, and the like.

The terminal device in the embodiments of the present disclosure can also be referred to as user equipment (UE), an access terminal, a user unit, a user station, a mobile station (MS), a mobile terminal (MT), a remote station, a remote terminal, a mobile device, an user terminal, a wireless communication device, a user agent, or a user device. The terminal device in the embodiments of the present disclosure can refer to a device providing voice and/or data connectivity for a user, which can be used to connect people, things and machines, such as handheld devices with wireless connection function, vehicle-mounted devices, etc. The terminal device in the embodiments of the present disclosure can be a mobile phone, a tablet computer (Pad), a notebook computer, a palm computer, a mobile internet device (MID), a wearable device, a vehicle, a wireless terminal in industrial control, a wireless terminal in self driving, a wireless terminal in remote medical surgery, a wireless terminal in smart grid, a wireless terminal in transportation safety, a wireless terminal in smart city, a wireless terminal in smart home, etc. Alternatively, the terminal device can be used to act as a base station. For example, the terminal device can act as a scheduling entity which provides a sidelink signal between terminal devices in vehicle-to-everything (V2X) or D2D, etc. For example, a cellular phone and a car communicate with each other using sidelink data. A cellular phone and a smart home device communicate without relaying the communication signal through a base station.

The network device in the embodiments of the present disclosure can be a device for communicating with the terminal device, and the network device can also be referred to as an access network device or a radio access network device. For example, the network device can be a base station. The network device in the embodiments of the present disclosure can refer to a radio access network (RAN) node (or device) for accessing the terminal device to the wireless network. The base station can broadly cover various names in the following or replace the following names, such as: a node B (NodeB), an evolved NodeB (eNB), a next generation NodeB (gNB), a relay station, a transmitting and receiving point (TRP), a transmitting point (TP), an access point (AP), a master eNB (MeNB), a secondary eNB (SeNB), a multi-standard radio (MSR) node, a home base station, a network controller, an access node, a wireless node, a transmission node, a transceiver node, a base band unit (BBU), a remote radio unit (RRU), an active antenna unit (AAU), a remote radio head (RRH), a central unit (CU), a distributed unit (DU), a positioning node, etc. The base station may be a macro base station, a micro base station, a relay node, a donor node, or the like, or a combination thereof. The base station may also refer to a communication module, a modem, or a chip provided in the apparatus or device. The base station may also be a mobile switching center, a device that undertakes the function of a base station in D2D, V2X, or M2M communication, a networkside device in a 6G network, a device that undertakes the function of a base station in a future communication system, or the like. The base station may support networks of the same or different access technologies. There is no restriction on the specific technology and the specific equipment adopted by the network device in the embodiments of the present disclosure.

The base station can be fixed or mobile. For example, a helicopter or drone can be configured to act as a mobile base station, and one or more cells can move according to a location of the mobile base station. In other examples, the helicopter or drone can be configured to act as a device that communicates with another base station.

In some deployments, the network device in the embodiments of the present disclosure can refer to a CU or a DU, or the network device includes a CU and a DU. The gNB can also include an AAU.

The network device and the terminal device can be deployed on land, including indoor or outdoor, handheld or vehicle-mounted; can also be deployed on the water surface; and can also be deployed on an airplane, a balloon and a satellite in the air. There is no restriction on scenarios in which the network device and the terminal device are located in the embodiments of the disclosure.

It shall be understood that all or part of the functions of the communication device in the present disclosure can also be implemented by a software function running on hardware, or by a virtualized function instantiated on a platform, such as a cloud platform.

For ease of understanding, some related technical knowledge related to the embodiments of the present disclosure is introduced first. The following related technologies can be combined with the technical solutions of the embodiments of the present disclosure as optional solutions, and all belong to the protection scope of the embodiments of the present disclosure. The embodiments of the present disclosure include at least part of the following contents.

As wireless communication technologies advance, communication systems are required to provide greater data transmission rates, greater numbers of connections, and greater coverage areas. For example, a 5G mobile standard calls for improving upon the data transmission rates, the number of connections, and the coverage areas to provide data rates of several tens of megabits per second to each of tens of thousands of users.

Certain wireless communication networks (e.g., 5G or later technology evolution) can support operation in very high or extremely high frequency (EHF) bands. These higher frequency ranges (FR) include millimeter wave (mmW) frequency bands. Generally, these FRs correspond to wavelengths of 1 mm to 10 mm, or frequency ranges of 30 GHz to 300 GHz. For example, FR2 in 5G systems corresponds to a frequency range of 24.25 GHz to 52.6 GHz.

These high frequency ranges can support very high throughput when used for communication. However, significant propagation loss at high frequencies is one of the challenges for wireless communication at very high or extremely high frequencies. For example, in millimeter wave bands, the propagation loss can be quite severe.

To reduce the propagation loss, beam transmission can be performed by a large-scale antenna array. A large number of densely distributed antenna elements increases the complexity and cost of digital beamforming, and a communication device generally performs beamforming in an analog domain based on the large-scale antenna array. A beam generated through the analog beamforming points in one direction at a specific moment. The communication device performs transmission through beam scanning. The beam scanning is also referred to as beam sweeping. For example, a network device can perform data transmission to a terminal device by sweeping a set of beams focused in different directions (directionally focused). For another example, the network device can achieve system coverage through the beam scanning. However, the beam scanning requires certain space-time (time-frequency) resources and has relatively large power consumption. That is, generation and scanning of the set of sweeping beams are expensive in terms of power consumption, time, and air resources.

For communication between the network device and the terminal device, when the terminal device is within the coverage of the network device, the network device and the terminal device may determine optimal transmit/receive beam pairs through beam pairing for uplink/downlink transmissions. The beam pairing can also be referred to as beam alignment or beam steering/pointing. For example, in communication between the network device and the terminal device based on a Uu communication interface, initial pairing can be performed by using a three-stage initial beam pairing process. The three-stage initial beam pairing process includes three processes P1, P2, and P3.

For a terminal device of a sidelink communication system, performing beam pairing can effectively improve the transmission rate and increase the coverage of the sidelink communication. However, how to perform beam pairing based on the sidelink is a problem to be solved. For example, in FR2, how beam pairing is established in the sidelink to complete subsequent communication is also one of the research topics of R18.

In order to analyze this problem, a communication mode of the sidelink is briefly described first in combination with FIG. 1 and FIG. 2.

With the development of the sidelink communication technology, sidelink communication is applied in more and more scenarios. For example, multiple V2X scenarios are proposed in NR. The V2X scenarios include vehicle platooning, advanced driving, extended sensors, remote driving, and so on.

The sidelink communication technology can involve information interaction of multiple terminal devices. Taking the V2X communication system 200 shown in FIG. 2 as an example, vehicle-to-vehicle (V2V) communication performed by the terminal device 201 and the terminal device 202 involves information interaction between vehicles. Vehicle-to-infrastructure (V2I) communication, vehicle-to-network (V2N) communication, and vehicle-to-pedestrian (V2P) communication respectively performed by the terminal device 201 and the terminal devices 203 to 205 involve information interaction between the vehicle and external systems.

The gradual expansion of the information interaction range puts forward higher requirements for the communication system. For example, the communication system is required to support higher throughput, lower latency, higher reliability, larger coverage, more flexible resource allocation, and the like. Taking the development of V2X as an example, in LTE-V2X, only a broadcast mode is supported for sidelink communication between terminal devices. In NR-V2X, three communication modes of broadcast, groupcast, and unicast can be supported.

The broadcast is the most basic communication mode in the sidelink communication. For the transmission mode of broadcast, the terminal device receiving the sidelink data can be any one of terminal devices around the terminal device as a transmitting terminal. For example, referring to FIG. 1, it is assumed that the terminal device 125 is as the transmitting terminaland transmits the sidelink data in the form of broadcast, all the terminal devices 121-124 and the terminal devices 126-129 that are around the terminal device 125 can be receiving terminals of the sidelink data.

The groupcast communication is configured to support information interaction between terminal devices in a specific group (or communication group), to assist in completing the negotiation and decision-making of the terminal devices in the group. The sidelink groupcast includes two transmission types. Type one is for a managed group with stable connection relationships, which has clear identity (ID) information and information of members in the group. Type two is for a connectionless group formed in a connectionless manner, for example, a distance-based dynamic group building groupcast, which needs to clearly indicate the communication distance of the current service.

For the transmission mode of groupcast, all terminal devices in a communication group can be configured to receive sidelink data. Alternatively, all terminal devices within a specific transmission range can be configured to receive the sidelink data. For example, referring to FIG. 1, for a communication group including the terminal devices 127-129, when the terminal device 127 transmits the sidelink data in the mode of groupcast, other terminal devices 128-129 in the communication group are all the receiving terminals configured for receiving the sidelink data. For another example, referring to FIG. 1, it is assumed that the terminal devices within a preset range include the terminal devices 127-129, when the terminal device 127 transmits the sidelink data in the mode of groupcast, other terminal devices 128-129 within the preset range are all the receiving terminals configured for receiving the sidelink data.

The unicast communication can enable the sidelink communication between two terminal devices. For example, in NR-V2X, the radio resource control (RRC) signaling based on the newly defined PC5 interface can enable reliable communication between the terminal devices. Exemplarily, the two terminal devices can achieve unicast communication by establishing a unicast link. The unicast link can also be referred to as a unicast connection. For example, the terminal devices can establish the unicast link based on a direct communication request (DCR).

As known from the foregoing, the beam scanning requires a large power consumption and relatively expensive time-frequency resources. Therefore, in the sidelink communication system, the terminal device needs to perform beam pairing based on the sidelink to establish a relevant unicast or multicast link with other terminal devices. Whether the unicast link is established or the groupcast or broadcast link is established, the beam pairing could not be performed by only the terminal device at the receiving end or the terminal device at the transmitting end.

The foregoing introduces various communication modes in the sidelink communication. For the unicast mode, performing of initial beam pairing by two terminal devices can be before the unicast link is established or after the unicast link is established. The unicast link described in the following can be replaced by the sidelink unicast link or the sidelink unicast connection.

The performing of the initial beam pairing before the unicast link is established is achieved as follows. That is, initial beams are first paired, and the unicast link is established through the paired beams. The key goal of performing of the initial beam pairing is to enable the terminal devices to establish the unicast link by using the paired beams. By performing the initial beam pairing, a first terminal device can establish the unicast link with other terminal devices that are farther away, thereby satisfying more service requirements or higher-level business case requirements. If the initial beam pairing is not performed before the unicast link is established, the terminal devices may not be able to determine the appropriate beam pair for required information exchange, such that the basic communication range could not be guaranteed.

In addition, performing the initial beam pairing before the unicast link is established can also improve resource utilization. If there is no unicast link established, the terminal device could not identify other surrounding communication devices prior to the beam pairing, and thus, the terminal device may perform initial beam pairing based on the DCR. For example, the terminal device at the transmitting end may need to perform transmission beam scanning multiple times based on all beams for transmitting DCR messages, to initiate establishment process of the unicast link with a target terminal device. Since the DCR is generally carried on the PSSCH, the terminal device at the transmitting end may need to establish the unicast link through transmission of multiple PSSCHs, resulting in inefficient utilization of time-frequency resources.

Whether the initial beam pairing is performed before or after the unicast link is established, the terminal device needs to determine in advance resources related to beam transmission and reception. For example, for SL FR2, the initial beam pairing procedure needs to be specified so that the terminal device can determine transmission and reception resources.

Before the beam pairing, the terminal device may not know whether there are any other devices around, or may be unclear at which transmission occasions different beams should be transmitted, or may be uncertain at which occasions reference signals should be received. This means that information of the reference signal (RS) for the initial beam pairing needs to be (pre-) configured. The transmission of reference signals corresponding to different beams shall be on (pre-) configured resources, enabling the terminal device at the receiving end to perform monitoring.

The reference signal for initial beam pairing refers to that the terminal device can perform beam pairing by transmitting the reference signal. Exemplarily, the reference signal for initial beam pairing may be a channel state information-reference signal (CSI-RS). The CSI-RS may be a sidelink CSI-RS. Exemplarily, the reference signal for initial beam pairing may be a synchronization signal similar to the CSI-RS. The synchronization signal is, for example, a primary synchronization signal (PSS) block and/or a secondary synchronization signal (SSS) block. For example, the reference signal for initial beam pairing may be a sidelinksynchronization signal block (S-SSB).

It shall be understood that, for initial beam pairing, periodic transmission of the reference signals is crucial for the terminal device at the receiving end to determine expected resources for reception. Taking the S-SSB as an example, the terminal device at the transmitting end (pre-) configures periodic transmission resources for S-SSBs with different beam directions. However, the terminal device at the receiving end could not receive every beam from the terminal device at the transmitting end, and has no information about when the beam scanning starts or ends. In this scenario, the terminal device at the receiving end may miss expected reception occasion. Therefore, the periodic signal transmissions can be more convenient for the terminal device at the receiving end to determine an appropriate reception occasion.

In addition, during beam pairing, the terminal device at the receiving end may also face the problem of being unable to determine which terminal device the received beam comes from. That is, the terminal device is unable to determine which terminal device each of received multiple beams comes from. For beam pairing, it is very important for the receiving terminal to be able to distinguish whether the received multiple beams come from a single transmitting terminal or from multiple transmitting terminals. If the terminal device could not distinguish where the received beam comes from, the terminal device may not be able to determine which one is the optimal beam, and consequently fails to perform beam pairing based on the received beams.

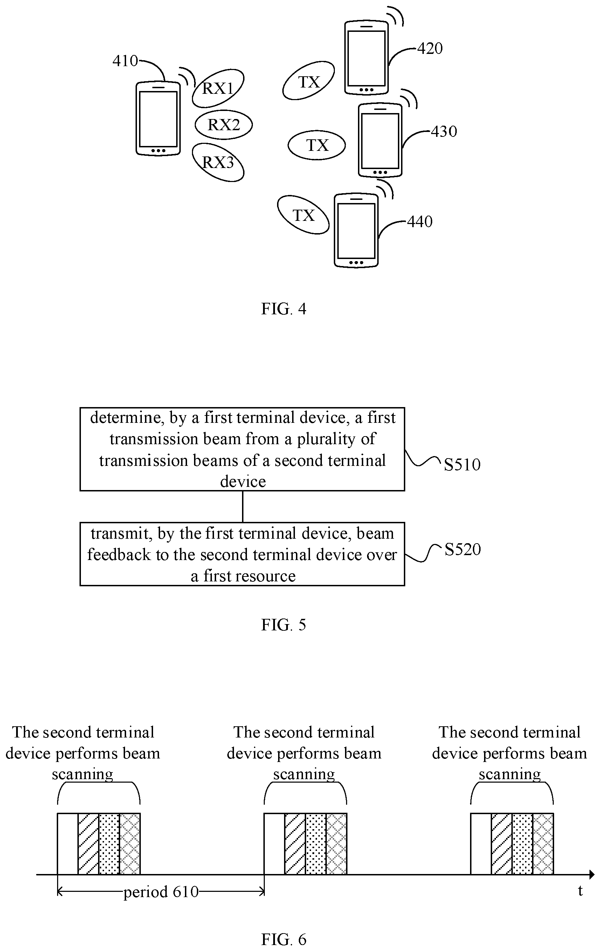

For ease of understanding, the following describes possible problems in beam communication and beam pairing between the terminal devices with reference to FIG. 3 and FIG. 4. FIG. 3 is a schematic diagram of beam communication between two terminal devices. FIG. 4 is a schematic diagram of beam communication between one terminal device at the receiving end and multiple terminal devices at the transmitting end.

Referring to FIG. 3, the terminal device 310 performs data reception (RX) through three reception beams, and the terminal device 320 performs data transmission (TX) through three transmission beams. The three transmission beams are TX1, TX2, and TX3, and the three reception beams are RX1, RX2, and RX3. As shown in FIG. 3, when the terminal device 310 and the terminal device 320 perform communication based on beams, the terminal device 310 and the terminal device 320 perform scanning of transmission beams and scanning of reception beams, respectively.

Referring to FIG. 4, the terminal device 410 performs data reception through three reception beams of RX1, RX2, and RX3. There are three terminal devices at the transmitting end, which include terminal devices 420, 430, and 440. As shown in FIG. 4, the three terminal devices at the transmitting end may transmit a same signal through three transmission beams (TX), respectively. For example, the three terminal devices may transmit synchronization signals based on a same synchronization source.

In this case, if the terminal device 410 is unable to identify different terminal devices at the transmitting end, a beam report transmitted by the terminal device 410 may have issues. For example, in a case where the terminal device 410 is required to transmit report beams (beam measurement reports) to the terminal devices 420 to 440, respectively, the terminal device 410 may transmit the report beam to only the terminal device 440, without reporting to the terminal devices 420 and 460.

In order to facilitate the terminal device at the receiving end to identify different terminal devices at the transmitting end, information structure of the S-SSB can be improved when performing the initial beam pairing using the S-SSB before establishment of the unicast link. For example, identification information is added in the S-SSB, so that the terminal device at the receiving end can identify the terminal device at the transmitting end from the S-SSB transmission of the terminal device at the transmitting end. In embodiments of the present disclosure, the S-SSB may also represent a sidelink synchronization signal and PSBCH block. For example, the sidelink synchronization signal in the NR V2X mainly includes a sidelink-PSS (S-PSS), a sidelink-SSS (S-SSS), and the signals are combined with PSBCH to form the S-SSB in a block format.

In the foregoing, the resources for beam transmission and beam reception need to be (pre-) configured when performing the initial beam pairing in the sidelink. Further, no matter whether the initial beam pairing is performed before or after the unicast link is established, the terminal device at the receiving end needs to perform beam feedback after determining the beam pair, so as to complete the final beam pairing process. Therefore, how to determine the resources for beam feedback by the terminal device at the receiving end is also a problem to be considered.

In view of the above, embodiments of the present disclosure provide a method for sidelink communication. In the method, after a first terminal device determines a first transmission beam for initial beam pairing, the first terminal device may determine a first resource for transmitting beam feedback according to first information. The first information may indicate a correspondence between the first resource and the first transmission beam, so that the second terminal device after receiving the beam feedback may determine the transmission beam selected by the first terminal device according to the resource occupied by the beam feedback.

In order to facilitate understanding, the method provided in the embodiments of the present disclosure is described in detail below in combination with FIG. 5.

Referring to FIG. 5, at S510, a first terminal device determines a first transmission beam from a plurality of transmission beams of a second terminal device.

The first terminal device and the second terminal device may be any two terminal devices for sidelink communication as described above. For example, the first terminal device may be a vehicle in V2X, and the second terminal device may be a vehicle in V2X or a pedestrian in V2X. For another example, the first terminal device may be a transmitting terminal of a sidelink, and the second terminal device may be a receiving terminal. For another example, the first terminal device may be a receiving terminal of a sidelink, and the second terminal device may be a transmitting terminal.

The first terminal device and the second terminal device may be two communication devices that need to perform data transmission in sidelink communication. In some embodiments, the first terminal device and the second terminal device may be two communication devices that perform initial beam pairing. In some embodiments, the first terminal device and the second terminal device may be two communication devices that establish a unicast link. In some embodiments, the first terminal device and the second terminal device may be two communication devices that perform management of beam pairs.

The second terminal device can perform unicast communication, groupcast communication, or broadcast communication with one or more terminal devices. The first terminal device may be any one of the one or more terminal devices. That is, the second terminal device may be a source terminal device, and the first terminal device may be any one of one or more destination terminal devices. Exemplarily, the second terminal device may be a cluster header terminal that initiates the groupcast or broadcast communication, and the first terminal device may be any one of cluster members in the groupcast or broadcast communication. For example, in V2X, the second terminal device may be a vehicle that performs groupcast communication to other vehicles, and the first terminal device may be the other vehicles in the groupcast communication.

The first terminal device and the second terminal device may be located within the network coverage of the network device or outside the network coverage. The terminal devices located within the network coverage can perform sidelink communication based on configuration of the network device.

The first terminal device and the second terminal device may be communication devices supporting an antenna array. In some embodiments, the first terminal device and the second terminal device can perform analog beamforming based on the antenna array. For example, the second terminal device can generate transmission beams and transmit signals to the first terminal device through beam scanning. The transmission beam can also be referred to as a transmit beam. For another example, the first terminal device can generate receiving beams and receive the signals transmitted by the second terminal device through beam scanning. In some embodiments, the first terminal device and the second terminal device can communicate at a high frequency or an ultra-high frequency. For example, the first terminal device and the second terminal device can communicate in a frequency range corresponding to FR2.

The transmission beams of the second terminal device refer to multiple sidelink transmission beams configured for the second terminal device to transmit reference signals. That is, the second terminal device can transmit the reference signals through the multiple transmission beams. The second terminal device is, for example, a source UE, and the first terminal device is, for example, a destination UE.

In some embodiments, the second terminal device can periodically generate multiple beams for transmission beam scanning. Exemplarily, the multiple transmission beams may respectively point to different directions. Therefore, the multiple transmission beams may be beams in a set of beams generated by the second terminal device and focused in different directions.

In some embodiments, the number of the multiple transmission beams of the second terminal device may be determined according to capability of the second terminal device, a (pre-) configured parameter, or a communication requirement, which is not limited in the present disclosure.

In some embodiments, the multiple transmission beams may be configured to carry reference signals. Each of the reference signal may be any sidelink reference signal described above. For example, the reference signal includes one or more of the following: a S-SSB, or a sidelink CSI-RS. For ease of description, the embodiments of the present disclosure are described below by taking S-SSB as an example of the reference signal.

In some embodiments, the multiple transmission beams may be associated with time units. For example, time indices of different S-SSBs may correspond to different sidelink transmission beams. The multiple transmission beams can be configured for periodic beam scanning based on transmission resources corresponding to the S-SSBs. For example, the multiple transmission beams generated by the second terminal device can be configured for periodic beam scanning based on a repetition period within one S-SSB period. For another example, in release 16 (Rel-16), S-SSBs can be transmitted outside of a resource pool with a period of 160 ms.

For ease of understanding, the periodic beam scanning of the second terminal device is illustrated below in conjunction with FIG. 6. Referring to FIG. 6, on a time axis, the second terminal device performs transmission beam scanning based on a time interval corresponding to period 610. Each transmission beam scanning operation in FIG. 6 involves 4 transmission beams, which may be directed toward 4 different directions, respectively. The 4 beams in different directions can be configured for repeated transmission of the S-SSB.

In some embodiments, the reference signals carried by the multiple transmission beams may not be periodic to avoid unnecessary reference signal transmission and mitigate resource congestion. For example, the reference signals for initial beam pairing can be transmitted in a semi-persistent manner with activation and deactivation configurations. As an example, if a transmitting terminal (e.g., a UE) does not intend to trigger establishment of a unicast link or has already completed beam pairing for the unicast link, the transmitting terminal does not need to periodically transmit reference signals (e.g., S-SSB or sidelink CSI-RS) for initial beam pairing.

The first terminal device determines the first transmission beam from the plurality of transmission beams of the second terminal device, which means that the first terminal device determines the first transmission beam according to a beam reception situation. The first terminal device may receive some of or all the plurality of transmission beams. The first terminal device may determine the transmission beam for initial beam pairing with the second terminal device based on the received some of or all the plurality of transmission beams.

For example, the first transmission beam may be a beam in the plurality of transmission beams of the second terminal device, or a beam in the some of the plurality of transmission beams that can be received by the first terminal device.

The first transmission beam may be one or more beams. For example, from among the plurality of transmission beams, the first terminal device can receive one or more transmission beams. When the first terminal device receives one transmission beam, the first transmission beam is the one transmission beam. When the first terminal device receives multiple transmission beams, the first transmission beam is one or more beams of the multiple transmission beams.

The first transmission beam is configured for initial beam pairing between the first terminal device and the second terminal device. The initial beam pairing may be performed before or after the unicast link is established, which will be described below in combination with the first information.

In some embodiments, the initial beam pairing between two terminal devices being performed before the unicast link is established can facilitate establishment of a sidelink transmission link between any two or more terminal devices. In some embodiments, the initial beam pairing between two terminal devices being performed after the unicast link is established can facilitate sidelink transmission between the two terminal devices in a high frequency band, thereby improving resource utilization.

The first terminal device may determine the first transmission beam in multiple manners. For example, the first terminal device can measure a reference signal carried by each of the plurality of transmission beams and determine the first transmission beam according to measurement results. For another example, when the first terminal device is within a network coverage, the first terminal device can determine the first transmission beam according to an indication of a network device. For yet another example, the first terminal device can determine the first transmission beam according to the measurement results and a (pre-) configured parameter.

For the first terminal device, the first transmission beam may be an optimal transmission beam for beam pairing with the second terminal device. In some embodiments, when the first terminal device receives multiple transmission beams carrying reference signals, the first terminal device can compare signal strengths of different transmission beams based on signal measurement to determine the first transmission beam. The signal strengths may include a reference signal received power (RSRP), a reference signal received quality (RSRQ), a signal to interference plus noise ratio (SINR), or other parameters that can reflect signal transmission quality.

The first terminal device can measure S-SSSs and/or PSBCH-DMRSs carried by the plurality of beams. For example, the first terminal device can perform PSBCH-RSRP measurement. After measuring all the S-SSBs, a best transmission beam of the second terminal device is determined based on the measurement results. The best transmission beam corresponds to a S-SSB with a measured highest RSRP.

In some embodiments, the first terminal device may determine the first transmission beam according to the indication of the network device. In the case of network coverage, the sidelink transmission only occurs on uplink (UL) slots. On the UL slots, there is also uplink transmission in a same cell or in a neighboring cell scheduled by the network device (e.g., a base station, such as gNB), and therefore, interference from the sidelink transmission to the UL reception needs to be controlled.

In some embodiments, for the case of network coverage, data transmission of the sidelink unicast link in which the first terminal device participates can be managed by the network device as long as the network device considers it useful. The network device can manage the sidelink data transmission directly without going through the Uu link. Alternatively, the network device can manage the sidelink data transmission through Uu interface forwarding.

In some embodiments, the network device can compare which link is suitable for the first terminal device to transmit data, and then indicate switching between the Uu link and the sidelink unicast link if necessary. In the case of network coverage, the first terminal device may report sidelink beams to the network device through the Uu link, so that the network device indicates or configures the indication/configuration of the sidelink beam. Therefore, the network device can know the quality of the beam-level link, so as to use the licensed spectrum better.

For Uu, the network device can support beam reporting for the current serving cell or for different serving cells, for example. Further, the network device can attach beam reporting information of the sidelink to the beam reporting. For example, the first terminal device can report the sidelink beam to the network device through the Uu link. By merging the beam reporting of Uu with the beam reporting of the sidelink unicast link, the network device can obtain comprehensive channel quality information for both the Uu link and sidelink associated with the first terminal device, enabling optimized decision-making.

At S520, the first terminal device transmits beam feedback to the second terminal device over a first resource. That is, the first resource is configured to carry the beam feedback transmitted by the first terminal device to the second terminal device.

The beam feedback is configured for the first terminal device to feed back a beam measurement situation to the second terminal device, or for the first terminal device to feed back the selected first transmission beam to the second terminal device, for initial beam pairing or beam management. The beam feedback may also be the beam reporting as described above.

In some embodiments, the beam feedback may include or at least include at least one of a source ID, a destination ID, and a layer 1 (L1)-RSRP (L1-RSRP) measurement result of the reference signal, for information identification. For example, the beam feedback may include the destination ID and the L1-RSRP measurement result.

In some embodiments, the beam feedback may be a RS. That is, the beam feedback does not need to be a payload. Exemplarily, the beam feedback may be associated with one or more of the following: a CSI-RS, a PSFCH, and sidelink control information (SCI). For example, the beam feedback may be carried by the CSI-RS or the PSFCH. For another example, the beam feedback may be carried in the SCI of the PSCCH.

The first resource may be a time domain resource, and/or a frequency domain resource, which is not limited in the disclosure.

In some embodiments, the first resource may be any of dedicated resources for initial beam pairing. Exemplarily, the first terminal device selects the first resource, to transmit the beam feedback, in a dedicated resource pool for initial beam pairing.

Exemplarily, the dedicated resources for initial beam pairing can be implemented by a dedicated sidelink resource pool. The resource pool can configure specific time/frequency resources for RS transmission with different beams. In the case of (pre-) configuring the resources, information of the resources is common to multiple terminal devices in the resource pool.

In some embodiments, the first resource may be a dedicated resource for transmitting the beam feedback to reduce resource collision. For example, the source terminal device can configure a plurality of resources as the dedicated resource for transmitting the beam feedback in a pre-allocated resource pool for the initial beam pairing. The size of each resource in the plurality of resources can also be configured in the pre-configured resource pool. The dedicated resource can be configured for the plurality of destination terminal devices to transmit the beam feedback. When the source terminal device is the second terminal device, the plurality of resources are configured for one or more terminal devices other than the second terminal device to transmit the beam feedback to the second terminal device. Therefore, the one or more terminal devices include the first terminal device.

For example, the dedicated resource for transmitting the beam feedback is independent of other resources for the initial beam pairing. For example, the resource for the beam feedback is (pre-) configured separately from the transmission resource of the PSCCH/PSSCH and the transmission resource of the reference signal.

In some embodiments, the first resource may be a resource outside the resource pool for the initial beam pairing. That is, a corresponding time-frequency resource is configured for the beam feedback in addition to the dedicated resource pool being configured for the initial beam pairing.

The first resource may be any resource in the plurality of resources for the beam feedback. The plurality of resources may be a plurality of time-domain resources and/or frequency-domain resources for the beam feedback. The plurality of resources can also be referred to as beam feedback resources or beam report resources. The plurality of resources may be a dedicated time slot or a dedicated resource allocated for the beam feedback.

In some embodiments, the plurality of resources may be time-frequency resources configured by the second terminal device for the plurality of destination terminal devices to transmit the beam feedback. For example, the plurality of resources may be all resources in the dedicated resource pool for the beam feedback, or may be dedicated resources in a sidelink resource pool for the initial beam pairing.

For example, the plurality of resources may be dedicated resources for transmitting the beam feedback to reduce resource collision with other transmissions associated with the initial beam pairing when the plurality of terminal devices at the receiving end transmit the beam feedback to the terminal device at the transmitting end.

The plurality of resources may include a plurality of feedback occasions (FOs) for beam feedback. The FOs can indicate different resources through different time domain positions, or can indicate different resources through different frequency domain positions, so that the transmitting and receiving parties corresponding to the beam feedback can confirm the beam associated with the resource. After the first transmission beam is determined, the first terminal device can indicate to the second terminal device that the first transmission beam is selected by using an FO associated with the first transmission beam.

In some embodiments, the first resource may be one FO, or may be a plurality of FOs, which will be exemplarily described below in combination with various implementation manners of the FOs.

The first terminal device may determine the first resource according to the first information. The first information can indicate a mapping relationship between the plurality of resources including the first resource and the plurality of transmission beams. That is, the beam feedback of the first terminal device is associated with the first transmission beam determined by the first terminal device. The first resource corresponds to the first transmission beam. That is, after the first terminal device determines the first transmission beam, the first terminal device can determine the first resource corresponding to the first transmission beam from among the plurality of resources according to the first information, and then transmit beam feedback over the first resource. Exemplarily, a transmission beam corresponding to each S-SSB or independently-configured sidelink CSI-RS has a beam feedback occasion associated with the transmission beam.

Exemplarily, the mapping relationship between the plurality of resources and the plurality of transmission beams may be configured as one-to-one, one-to-many, many-to-one, or many-to-many. For example, when the first transmission beam is one beam, the first resource may be one resource corresponding to the one beam, or may be multiple resources corresponding to the one beam. For another example, when the first transmission beam is configured as multiple beams, the first resource may be one resource or multiple resources corresponding to the multiple beams.

Exemplarily, the mapping relationship in the first information means that the resource for the beam feedback of the first terminal device is associated with the determined transmission beam of the second terminal device. When the second terminal device selects the first resource for the beam feedback, the first resource can be mapped to the first transmission beam.

In some embodiments, the mapping relationship between the plurality of resources for beam feedback and the plurality of transmission beams of the first terminal device is (pre-) configured and known to both the first terminal device and the second terminal device. That is, the first information is shared between the first terminal device and the second terminal device.

In some embodiments, the mapping relationship in the first information may also refer to a mapping relationship between resources for beam feedback (beam feedback resources) and reference signals carried by the transmission beams. For example, after the second terminal device receives reference signals carried by the multiple transmission beams, the second terminal device can determine a corresponding transmission beam and a corresponding beam feedback resource according to an index of each of the reference signals.

In some embodiments, the first terminal device can also determine a beam for transmitting the beam feedback through the first transmission beam of the second terminal device. For example, the first terminal device can determine a receiving beam through the first transmission beam. The first terminal device can determine the transmission beam for transmitting the beam feedback according to the determined receiving beam.

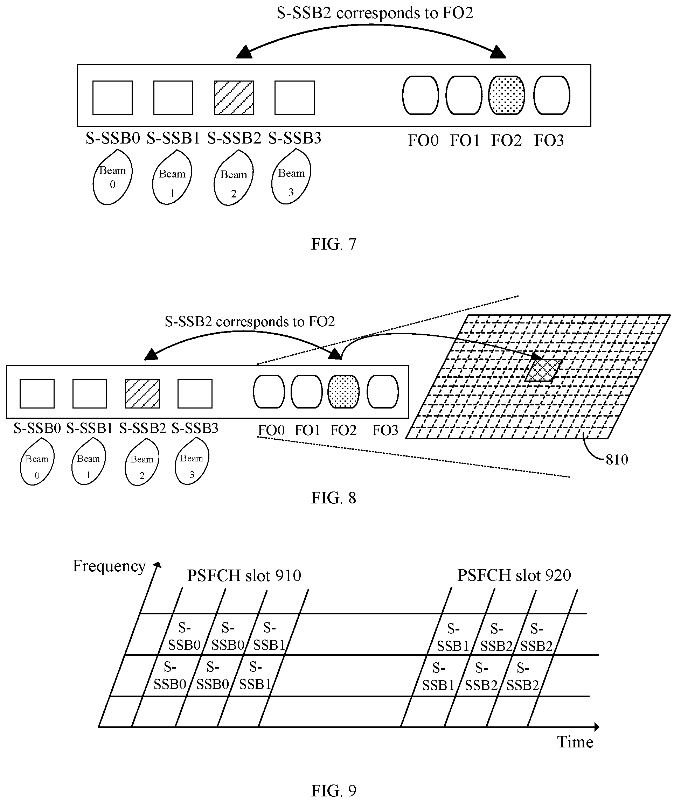

For ease of understanding, the mapping relationship between the transmission beams and resources for the beam feedback is described below with reference to FIG. 7 and FIG. 8. FIG. 7 is a schematic diagram of a possible mapping relationship between S-SSBs and FOs. FIG. 8 is a schematic diagram of a possible mapping relationship between S-SSBs and resources occupied by FOs.

Referring to FIG. 7, the second terminal device transmits four S-SSBs through four beams respectively. The four beams are beam 0 to beam 3 respectively. Beam 0 is configured to transmit S-SSB0, beam 1 is configured to transmit S-SSB1, beam 2 is configured to transmit S-SSB2, and beam 3 is configured to transmit S-SSB3. The four S-SSBs correspond, respectively, to four FOs. Specifically, S-SSB0 corresponds to FO0, S-SSB1 corresponds to FO1, S-SSB2 corresponds to FO2, and S-SSB3 corresponds to FO3.

As shown in FIG. 7, the first terminal device can measure all the S-SSBs and determine an optimal transmission beam (the first transmission beam) of the second terminal device based on measurement results. For example, if the first terminal device selects beam corresponding to the S-SSB2 as the first transmission beam, the first terminal device can determine a receiving beam of the first terminal device based on the first transmission beam. The first terminal device can select the transmission beam for the beam report of the first terminal device by using the determined receiving beam. Based on the mapping relationship in the first information, the first terminal device can transmit the beam report on the FO2. The beam report can be carried in PSFCH or other reference signals.

The corresponding relationship between the S-SSBs and the FOs in FIG. 8 is the same as that in FIG. 7. Referring to FIG. 8, when the first terminal device transmits the beam report on the FO2, a resource corresponding to the FO2 is a time-frequency resource in a resource pool 810. The resource pool 810 is a pre-allocated resource pool. Further, a size of a resource corresponding to each FO can also be configured in the pre-configured resource pool.

In some embodiments, the first information can be shared by the second terminal device to the first terminal device. For example, when the second terminal device transmits the reference signals through the plurality of transmission beams, the reference signals can carry the first information, so that the first terminal device and the second terminal device can transmit and receive the beam feedback respectively based on the same mapping relationship.

The foregoing describes how the second terminal device determines the resources for beam feedback and how the first terminal device determines the selected best transmission beam based on the resource for the beam feedback in the initial beam pairing, with reference to FIGS. 5 to 8. The first terminal device and the second terminal device can respectively determine the first resource and the first transmission beam based on the shared first information, thereby effectively improving the efficiency of the initial beam pairing.

As known from the above, the initial beam pairing can be performed before or after the first terminal device and the second terminal device establish the unicast link. The transmission of the first information is related to an execution timing of the initial beam pairing.

For example, when the initial beam pairing is performed before the unicast link is established, resource information of the reference signal shall not be provided by the PC5-RRC signaling. In this case, the reference signal may be the S-SSB, and the first information may be determined according to the PSFCH. For example, the first information may be carried in the PSFCH.

For example, when the initial beam pairing is performed after the unicast link is established, the two terminal devices can transmit sidelink channels. Therefore, the first information may be determined according to the SCI. For example, the first information may be carried in the SCI.

For ease of understanding, the following describes, with reference to two embodiments, multiple transmitting manners of the first information in the initial beam pairing. The first embodiment is that the initial beam pairing is performed before the unicast link is established, and the second embodiment is that the initial beam pairing is performed after the unicast link is established.

In the first embodiment, performing the initial beam pairing is to enable the terminal devices to establish a unicast or multicast link with paired beams. That is, the initial beam pairing can allow the terminal device at the transmitting end to establish the unicast or multicast link with other terminal devices at the receiving end which are further away.

Exemplarily, multiple terminal devices can transmit RSs for transmission beam scanning in a dedicated sidelink (SL) resource pool. To achieve this, the dedicated SL resource pool for transmission of the RSs for transmission beam scanning includes multiple candidate resources in time/frequency and/or multiple resources corresponding to multiple candidate sequences for transmission of the RSs (for brevity, referred to as sequence resources hereinafter). The second terminal device can select or determine the resource/sequence resources for transmission of the RSs for transmission beam scanning from the candidate resources/candidate sequence resources. The selection or determination of the resource/sequence resources for transmission of the RSs should depend on a value of the destination ID of the subsequent unicast link establishment process.

If any terminal device can be the first terminal device, it may lead to unnecessary power consumption caused by that multiple first terminal devices measure the RSs and report the first transmission beam. Since the (pre-) configured resource information is common to the multiple terminal devices in the same SL resource pool, it may lead to resource collision between transmissions of RSs from different terminal devices.

To solve the above problem, the resources/sequence resources can be linked with destination IDs. Based on this link, different terminal devices can use different resources/sequence resources for RS transmission. That is, when the second terminal device performs transmission beam scanning with S-SSBs or sidelink CSI-RSs, the S-SSBs or sidelink CSI-RSs are associated with the ID of the destination terminal device, thereby avoiding or at least reducing the probability of collision of the resources/sequence resources of the multiple terminal devices transmitting the RSs in the same SL resource pool.

In the second embodiment, since the preconfigured resource information is common to the multiple terminal devices, it may also lead to resource collision of transmissions of the RSs from different terminal devices.

Optionally, the resources/sequence resources can also be linked with the destination IDs. The terminal devices with different destination IDs can use different resources for RS transmission. The information of source ID and destination ID can be carried in SCI, thereby avoiding or at least reducing the probability of collision of resources of the multiple terminal devices transmitting the RSs in the same SL resource pool.

Optionally, after determining the transmission beam of the second terminal device, the first terminal device can indicate the determined transmission beam of the second terminal device to the second terminal device. As described above, the first terminal device can determine the transmission beam based on the measurement results (e.g., RSRP, RSRQ, SINR) of the RSs for initial beam pairing. The first terminal device can also perform further measurement and detection after successfully decoding the PSCCH/PSSCH carrying the DCR message.

Optionally, the first terminal device can detect whether the measurement results of the PSCCH/PSSCH are higher than a threshold.

Optionally, the first terminal device can determine best N transmission beams of the first terminal device according to the measurement results.

For the purpose of beam pairing, each transmission occasion of the DCR message may have an associated reception resource, or have an associated response window to distinguish multiple transmission beams of the second terminal device. The second terminal device can indicate different transmission beam indices through the PSCCH/PSSCH carrying the unicast link establishment message. Further, the second terminal device can add an information field in SCI for beam reporting.

Optionally, the SCI can indicate the association between S-SSBs and FOs, and the SCI carries ID information of the second terminal device and the first terminal device to indicate the first information related to the resources for the beam feedback.

Optionally, if the second terminal device knows layer 2 (L2) ID of the first terminal device in advance, the L2 ID can be used as the destination ID for transmission of the DCR message. Each terminal device has an L2 ID when performing V2X PC5 communication. For example, the terminal device may configure an L2 ID. Each frame transmitted over the L2 link contains the ID information.

Optionally, the second terminal device can also use a default ID as the destination identity for transmission of the DCR message. The default ID is, for example, a proximity based services (ProSe) identity.

Optionally, when internet protocol (IP) based V2X messages are supported, the terminal device may automatically configure an IPv6 link as a source IP address.

The first terminal device can check the destination ID of the received PSCCH/PSSCH. If the first terminal device detects that the destination identity in the received DCR message is its own L2 identity or a related ProSe identity, the first terminal device may initiate a response. If the first terminal device receives a DCR from the second terminal device, the first terminal device may transmit a message for establishing a link with the second terminal device within a window associated with the received DCR. The message is, for example, a direct communication accept (DCA).

Optionally, a transmission space for transmitting the above-mentioned DCA and the like can be configured based on different space settings. For example, the transmission space can be configured based on a reception space for receiving the DCR, based on a transmission space indicated by the second terminal device for transmitting the DCR, or based on both.

Optionally, for subsequent beam management, the first terminal device can report measurement results (e.g., RSRP, RSRQ, SINR) based on the RS. The RS can be associated with one or more DCRs received from the second terminal device. The time position of the DCR can be configured in an aperiodic manner, and a corresponding response window position can also be configured in an aperiodic manner.

The first information is further configured for the second terminal device to determine the first transmission beam. In some embodiments, based on the mapping relationship indicated by the first information, after receiving the beam feedback on the first resource, the second terminal device can determine which transmission beam is selected by the first terminal device. That is, the second terminal device can determine the first transmission beam selected by the first terminal device according to the first information and the first resource occupied by the beam feedback.

In some embodiments, based on the mapping relationship between the S-SSBs and the FOs, the beam index can be implicitly indicated by the time resource for transmission of the beam feedback. For example, the first terminal device may receive the PSBCH or SCI, both of which carry implicit indications of the time resources for transmission of the beam feedback. Furthermore, in order for the second terminal device to identify a corresponding beam report from the first terminal device, the beam report may carry ID related information of the second terminal device.

In an example, the second terminal device may expect to configure a corresponding receiving beam for each FO. In FIG. 7, after receiving the beam report in FO2, the second terminal device can identify the desired beam, i.e., beam 2, for transmission. Thereafter, based on the determined transmit/receive beam pair, a unicast link can be established following existing link establishment procedures.

As mentioned above, the plurality of resources for transmitting the beam feedback may include a plurality of FOs. The first information may indicate a mapping relationship between the plurality of transmission beams of the second terminal device and the plurality of resources for the first terminal device to transmit the beam feedback. The mapping relationship may also indicate a corresponding relationship between the plurality of transmission beams and the plurality of FOs. In an example, any of the plurality of transmission beams may correspond to one or more FOs. For example, the first transmission beam corresponds to one FO or multiple FOs. Therefore, the first terminal device can transmit the beam feedback on the one FO or on one or more of the multiple FOs.

In some embodiments, the number of the plurality of FOs may be larger than the number of the plurality of transmission beams. To establish correspondence, the plurality of FOs can be grouped into a plurality of FO groups with the number of the plurality of transmission beams as a period. Any of the plurality of transmission beams corresponds to FOs respectively at a same position in the plurality of FO groups.

In an example, the plurality of FOs being grouped with the number of the plurality of transmission beams as the period means that the period for the plurality of FOs being grouped may be the number of the plurality of transmission beams or an integer multiple of the number of the plurality of transmission beams.

The period determined based on the number of the plurality of transmission beams may also be referred to as an association period. The association period of the mapping of the S-SSBs to the FOs can be defined as a period in which at least one round of mapping of the SSBs to the FOs is completed, such that each actually transmitted S-SSB is mapped to at least one FO. For example, when the beam feedback is performed through the PSFCH, the association period of the mapping of the S-SSBs to the FOs may be an integer multiple of the PSFCH configuration period. The association period may be counted from radio frame 0.

In some embodiments, when the number of FOs in a last FO group of the plurality of FO groups is less than the number of the plurality of transmission beams, the FOs in the last FO group are not configured for transmitting the beam feedback. The FOs not configured for transmitting the beam feedback means that the FOs are not associated to the plurality of transmission beams of the second terminal device or the reference signals carried by the plurality of transmission beams.

After one round of mapping of the S-SSBs to the FOs is completed in one association period, a next round of mapping is continued until remaining FOs are not enough to complete one round of mapping of the S-SSBs to the FOs. If the remaining FOs are not enough to complete one round of mapping of the S-SSBs to the FOs, the remaining FOs can be deemed as an invalid FO set. All the FOs in the invalid FO set are not associated to the S-SSBs.

For example, if the number of transmission beams of the second terminal device is 4 (beam 0 to beam 3) and the number of configured FOs is 10 (FO0 to FO9), 3 FO groups including a first FO group, a second FO group, and a third FO group can be obtained with a period of 4. The first FO group includes FO0 to FO3, the second FO group includes FO4 to FO7, and the third FO group includes FO8 and FO9.

As can be seen from the above grouping, the number of FOs in the third FO group is not enough to complete one round of mapping, and the FOs in the third FO group can be referred to as an invalid FO set. FOs at a same position in the first FO group and the second FO group may correspond to a same transmission beam. For example, beam 0 corresponds to FO0 and FO4, and beam 1 corresponds to FO1 and FO5, and so on.

In some embodiments, the number of the plurality of FOs may be determined according to the number of the plurality of transmission beams. The first information is further configured to indicate that the plurality of transmission beams are in one-to-one correspondence with the plurality of FOs. The number of the plurality of FOs may be equal to the number of the plurality of transmission beams or an integer multiple of the number of the plurality of transmission beams.

In an example, the mapping relationship between the plurality of resources and the plurality of transmission beams may be a one-to-one mapping. That is, a one-to-one mapping is configured (in advance) between resources on which the second terminal device transmits the S-SSBs and occasions on which the first terminal device transmits the beam feedback. For the first terminal device, if S-SSB2 is determined to be the best beam based on a measured RSRP of the S-SSB2, the beam report is transmitted on FO2 corresponding to the resource occupied by the S-SSB2 after all the S-SSBs are transmitted by the second terminal device.

In some embodiments, the plurality of resources may include M FOs, where M is a natural number greater than 1. The M FOs are configured for N terminal devices other than the second terminal device to transmit beam feedback, where N is a natural number greater than 1 and less than M. The number of FOs corresponding to each of the N terminal devices is determined according to a service priority of the N terminal devices and/or a communication requirement of the N terminal devices.

In an example, the service priority of the terminal device may be a priority of a communication service that the second terminal device expects to establish with the first terminal device. The service priority may also represent urgency of communication between the second terminal device and the first terminal device.

In an example, the number of valid FOs included in the association period in which the S-SSBs are mapped to the FOs is variable. For example, the number of FOs can be configured according to the urgency and/or the priority of the service of the second terminal device to the first terminal device, respectively. In this scenario, the number of FOs of each first terminal device may be different.

In an example, the number of FOs corresponding to at least two terminal devices of the N terminal devices is different. A terminal device with a highest service priority among the N terminal devices corresponds to a largest number of FOs. That is, the number of FOs may be positively correlated with the service priority. For example, among two terminal devices with different numbers of FOs, a terminal device with a higher service priority corresponds to a larger number of FOs.

For ease of understanding, the number of FOs of each of different terminal devices is described below in combination with a formula. If independent resources are configured for the beam feedback, it is assumed that the number of resource blocks configured for the FOs is M, and the number of terminal devices that currently need to use the beam report is N. The N terminal devices may be N destination terminal devices including the first terminal device.

Valid FOs are allocated to each of the N terminal devices according to the urgency and priority of the service. That is, a corresponding number of FOs is allocated to each of the N terminal devices. It is assumed that a maximum resource number of valid FOs allocated to an i-th terminal device among the N terminal devices is denoted as kᵢ, i∈[1, 2, ...N]. If ${\sum }_{i = 1}^{N} {k}_{i} > M$*,* a maximum value among ki to k_{N} is processed by a first descending gradient (step size) until ${\sum }_{i = 1}^{N} {k}_{i} \leq M$*.* The first descending gradient is, for example, 1 or 2.

Exemplarily, if ${\sum }_{i = 1}^{N} {k}_{i} > M$*, max*{*kᵢ*} is determined to be *kₘ,* i.e., *kₘ* = *max*{*kᵢ*}*.* Further, *kₘ* is processed by a descending gradient of 1, i.e., *kₘ = kₘ* - 1, and the process is repeated until ${\sum }_{i = 1}^{N} {k}_{i} \leq M$*.*

After the number of FOs of each of the N terminal devices is determined in the above processing manner, the number of FOs of the i-th terminal device is denoted as ki, and the FOs corresponding to the i-th terminal device may be expressed as: {FOₛᵢ, kᵢ}.

FOₛᵢ represents a start position of the FOs corresponding to the i-th terminal device, and ${FO}_{si} = {\sum }_{j = 1}^{i - 1} {k}_{j}$*,* j∈[1,2,...i-1].

Taking the N S-SSBs carried by the transmission beam as an example, a correspondence established between a time index of S-SSBi in the N S-SSBs and FOₛᵢ may be expressed as: {S-SSBi, (FOₛᵢ, kᵢ)}.

As known from the above, the second terminal device can allocate the FOs according to the urgency and the priority of the services of the N terminal devices, and establish the correspondence between the time index of S-SSBi and FOₛᵢ. In this way, the second terminal device can ensure the maximum number of FOs for the highest priority service, and can further maximize the possibility of beam pairing with the terminal devices that have the high priority service.

In some embodiments, the number of the FOs corresponding to each of the N terminal devices may be adjusted according to a configuration coefficient. The configuration coefficient may be related to the service priority of the terminal device. That is, the second terminal device can establish a dynamic resource allocation mechanism, that is, the FOs allocated to each destination terminal device is adjustable.

For example, based on the total number of FOs, a base number (base allocation) can be configured for each destination terminal device. For example, the M FOs first satisfy the base number (baseline requirement) for each of the N terminal devices, and then the remaining FOs can be dynamically adjusted according to the configuration coefficient of each destination terminal device.

Optionally, the configuration coefficient refers to a coefficient for adjusting the number of FOs of each destination terminal device. The configuration coefficient may be set according to the size of the service priority.

For example, the number of FOs corresponding to each of the N terminal devices is determined by dividing the M FOs into N equal parts. The remaining FOs after the M FOs are divided into the N equal parts are configured for one or more terminal devices each having a priority higher than a first threshold among the N terminal devices. That is, for a terminal device with a priority lower than or equal to the first threshold, FOs corresponding to the terminal device is equal to FOs in any one part of the N equal parts obtained after dividing the M FOs. For a terminal device with a priority higher than the first threshold, FOs corresponding to the terminal device may be greater than FOs in one part of the N equal parts. The first threshold may be configured or preconfigured.

For example, the second terminal device first allocates available FOs equally to each destination terminal device by dividing total FOs into equal parts. Thereafter, the remaining FOs can be configured for some destination terminal devices each having a higher priority. For example, the remaining FOs may be configured for destination terminal devices each having a configuration coefficient greater than 1 according to the configuration coefficient of each destination terminal device. When the priority is higher than the first threshold, the configuration coefficient is greater than 1.

After the number of FOs of each of the N terminal devices is determined in the above manner, the number of the FOs of the i-th terminal device is expressed as αᵢ×H, and the FOs corresponding to the i-th terminal device in the N terminal devices can be represented as: {FOₛᵢ, αᵢ×H}.

H represents a base number of FOs corresponding to each of the N terminal devices, αᵢ represents the configuration coefficient of the i-th terminal device, αᵢ is an integer, and ${\sum }_{i = 1}^{N} \left({α}_{i}\times H\right) \leq M , {FO}_{si} = {\sum }_{j = 1}^{i - 1} \left({α}_{j}\times H\right)$, j∈[1,2,...i-1]. Further, FOₛ₁=1.

In some embodiments, the plurality of resources include one or more dedicated slots for transmitting the beam feedback. There are resources occupied by K×X FOs within any slot of the one or more dedicated slots, where K represents a number of FOs in the frequency domain, K being a natural number greater than or equal to 1, and X represents a number of FOs in the time domain, X being a natural number greater than or equal to 1.

Exemplarily, there are resources occupied by one FO, or resources occupied by multiple FOs in the dedicated slots for transmitting the beam feedback. When there are the resources occupied by the multiple FOs in any slot of the dedicated slots, the time-frequency resources occupied by the multiple FOs may be overlap in time domain while being separated in frequency domain, or be separated in time domain while overlapping in frequency domain.

Optionally, indices of the K×X FOs may be incremented in the time domain and/or the frequency domain. For example, the multiple FOs can correspond to multiple S-SSBs that are in ascending order of indices. That is, the multiple S-SSBs corresponding to the multiple FOs may be in ascending order of indices. For another example, if there are resources occupied by multiple FOs in the frequency domain, the FOs may be in ascending order of indices in the frequency domain. For another example, when resources occupied by multiple FOs are configured in a PSFCH slot, the FOs may be in ascending order of indices in the PSFCH slot.

Optionally, when the multiple FOs are arranged in ascending order of indices of configured PSFCH slots, an impact on automatic gain control (AGC) needs to be considered. For example, in order to reduce the impact on the AGC, if the destination terminal device does not process the S-SSB in the PSFCH slot corresponding to a current FO, a next FO should be separated from the nearest preceding S-SSB before by at least P_{gap} symbols. That is, the FO is valid in the case that the next FO and the nearest preceding S-SSB are separated by at least P_{gap} symbols. P_{gap} is an integer, and may be 1, 2, 3, or the like.

Exemplarily, a separate time slot is configured for beam feedback, and when the beam feedback is fed back through the PSFCH, the time slot can be referred to as a PSFCH slot. In the PSFCH slot, there are a plurality of frequency domain PSFCH feedback occasions (FOs) that jointly cover K×X continuous resource blocks, where K represents the number of FOs in the frequency domain, and X represents the number of FOs in the time domain. For example, the second terminal device may be configured to allow that there are multiple time domain FOs in one time slot in the time domain.

For ease of understanding, the following takes the S-SSB as an example of the reference signal, and a correspondence between the S-SSBs and resources occupied by the FOs is exemplarily described in the case of configuring dedicated PSFCH slots in combination with FIG. 9.

Referring to FIG. 9, time indices of the S-SSBs and the FO(s) have a correspondence in the frequency domain and the time domain, respectively. The time domain in FIG. 9 includes two PSFCH slots, which are PSFCH slot 910 and PSFCH slot 920, respectively.

As shown in FIG. 9, there are 2 FOs in the frequency domain (K is 2), and there are 3 FOs (X is 3) in each PSFCH slot in the time domain. Therefore, in each PSFCH slot, there are resources occupied by 2×3 FOs. FIG. 9 shows 12 FOs, and a time index of each S-SSB is associated with resources occupied by 4 FOs. For example, S-SSB0 is associated with resources occupied by first 2×2 FOs in PSFCH slot 910, S-SSB1 is associated with resources occupied by last 2×1 FOs in PSFCH slot 910 and resources occupied by first 2×1 FOs in PSFCH slot 920, and S-SSB2 is associated with resources occupied by last 2×2 FOs in PSFCH slot 920.

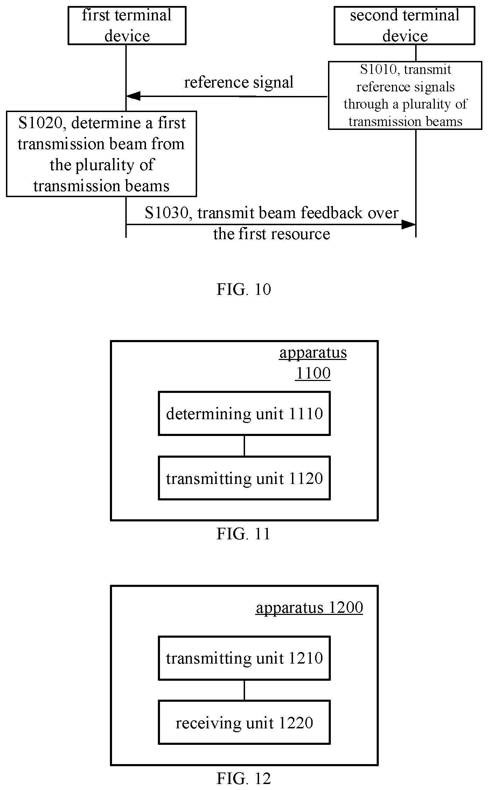

The embodiments of the present disclosure are more completely described below in combination with a specific example of FIG. 10. It shall be noted that the examples of FIGS. 5 to 9 are merely to help those skilled in the art understand the embodiments of the present disclosure, and are not intended to limit the embodiments of the present disclosure to the specific numerical values or specific scenarios illustrated. Those skilled in the art can obviously make various equivalent modifications or changes according to the examples of FIGS. 5 to 9, and such modifications or changes also fall within the scope of the embodiments of the present disclosure.

FIG. 10 is described from the perspective of interaction between the first terminal device and the second terminal device. The second terminal device may be a source UE, and the first terminal device may be any UE of a plurality of destination UEs.

Referring to FIG. 10, at S1010, the second terminal device transmits reference signals through a plurality of transmission beams.

At S1020, the first terminal device determines a first transmission beam from the plurality of transmission beams. After receiving the reference signals, the first terminal device can perform measurement based on the received reference signals, to determine the first transmission beam. The first terminal device may determine, according to the first information, a first resource corresponding to the first transmission beam.

At S1030, the first terminal device transmits beam feedback to the second terminal device over a first resource. The beam feedback may be configured for the second terminal device to determine that a best transmission beam selected by the first terminal device is the first transmission beam.

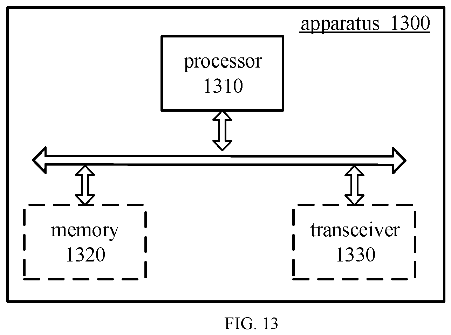

The method embodiments of the present disclosure are described in detail above in conjunction with FIGS. 1 to 10. The apparatus embodiments of the present disclosure are described in detail below in conjunction with FIGS. 11 and 13. It should be understood that the description of the apparatus embodiments corresponds to the description of the method embodiments, and therefore, parts that are not described in detail can be referred to the method embodiments above.

FIG. 11 is a schematic block diagram of an apparatus for sidelink communication according to embodiments of the present disclosure. The apparatus 1100 can be any of the first terminal devices described above. The apparatus 1100 shown in FIG. 11 includes a determining unit 1110 and a transmitting unit 1120.

The determining unit 1110 is configured to determine a first transmission beam from a plurality of transmission beams of a second terminal device, the first transmission beam being configured for initial beam pairing between the first terminal device and the second terminal device.

The transmitting unit 1120 is configured to transmit beam feedback to the second terminal device over a first resource, the first resource being determined according to first information, the first information being configured to indicate a mapping relationship between a plurality of resources including the first resource and the plurality of transmission beams, and the first information also being configured for the second terminal device to determine the first transmission beam.

Optionally, the plurality of resources are dedicated resources for one or more terminal devices other than the second terminal device to transmit beam feedback to the second terminal device, and the one or more terminal devices include the first terminal device.

Optionally, the plurality of resources include a plurality of feedback occasions (FOs), and the mapping relationship includes that any transmission beam of the plurality of transmission beams corresponds to one or more FOs.

Optionally, the number of the plurality of FOs is greater than the number of the plurality of transmission beams, the plurality of FOs are divided into a plurality of FO groups with the number of the plurality of transmission beams as a period, and any transmission beam of the plurality of transmission beams corresponds to FOs respectively at a same position in the plurality of FO groups.

Optionally, when the number of FOs in a last FO group of the plurality of FO groups is less than the number of the plurality of transmission beams, the FOs in the last FO group are not configured for transmitting beam feedback.

Optionally, the number/quantity of the plurality of FOs is determined according to the number of the plurality of transmission beams, and the first information is further configured to indicate that the plurality of transmission beams are in one-to-one correspondence with the plurality of FOs.

Optionally, the plurality of resources include M FOs, M is a natural number greater than 1, the M FOs are configured for N terminal devices other than the second terminal device to transmit beam feedback, N is a natural number greater than 1 and less than M. The number of FOs corresponding to each terminal device of the N terminal devices is further determined according to a service priority of the N terminal devices and/or a communication requirement of the N terminal devices.

Optionally, the number of FOs corresponding to at least two terminal devices of the N terminal devices is different, and the number of FOs corresponding to a terminal device with the highest service priority in the at least two terminal devices is the largest.

Optionally, the number of FOs corresponding to an i-th terminal device of the N terminal devices is represented by kᵢ, i∈[1, 2, ...N]. If ${\sum }_{i = 1}^{N} {k}_{i} > M$*,* a maximum value among k₁ to k_{N} is processed according to a first descending gradient until ${\sum }_{i = 1}^{N} {k}_{i} \leq M$*,* and the FOs corresponding to the i-th terminal device may be represented as: {FOₛᵢ, kᵢ}.

FOₛᵢ represents a start position of the FOs corresponding to the i-th terminal device, and ${FO}_{si} = {\sum }_{j = 1}^{i - 1} {k}_{j}$, j∈[1,2,...i-1].

Optionally, the number of FOs corresponding to each terminal device of the N terminal devices is adjusted according to a configuration coefficient, the configuration coefficient is related to the service priority of the terminal device, and the FOs corresponding to the i-th terminal device of the N terminal devices are represented as: {FOₛᵢ, αᵢ×H}.

H represents a base number of FOs corresponding to each terminal device of the N terminal devices, αᵢ represents the configuration coefficient of the i-th terminal device, αᵢ is an integer, ${\sum }_{i = 1}^{N} \left({α}_{i}\times H\right) \leq M$*,* and ${FO}_{si} = {\sum }_{j = 1}^{i - 1} \left({α}_{j}\times H\right)$*,* j∈[1,2,...i-1].

Optionally, the number of FOs corresponding to each terminal device of the N terminal devices is determined by dividing M FOs into N equal parts, and the remaining FOs after the M FOs are divided into the N equal parts are configured for one or more terminal devices each having a priority higher than a first threshold among the N terminal devices.

Optionally, the plurality of resources include one or more dedicated slots for transmitting the beam feedback. Within any slot of the one or more dedicated slots, there are resources occupied by K×X FOs. K represents a number of FOs in a frequency domain, K is a natural number greater than or equal to 1, X represents a number of FOs in a time domain, X is a natural number greater than or equal to 1, and indices of the K×X FOs are in an ascending order in the time domain and/or the frequency domain.

Optionally, the determining unit 1110 is further configured to determine the first transmission beam according to an indication of the network device.

Optionally, the beam feedback is associated with one or more of: a sidelink CSI-RS, a PSFCH, and a SCI.

Optionally, the initial beam pairing is performed before the first terminal device and the second terminal device establish the unicast link, and the first information is determined according to the PSFCH. Alternatively, the initial beam pairing is performed after the first terminal device and the second terminal device establish the unicast link, and the first information is determined according to the SCI.

Optionally, the plurality of transmission beams are configured to carry reference signals, and each of the reference signals includes one or more of: an S-SSB, and a sidelink CSI-RS.

FIG. 12 is a schematic block diagram of an apparatus for sidelink communication according to embodiments of the present disclosure. The apparatus 1200 may be any of the second terminal devices described above. The apparatus 1200 shown in FIG. 12 includes a transmitting unit 1210 and a receiving unit 1220.

The transmitting unit 1210 is configured to transmit reference signals through a plurality of transmission beams, the plurality of transmission beams being configured for the first terminal device to determine a first transmission beam, the first transmission beam being configured for the first terminal device and the second terminal device to perform initial beam pairing.

The receiving unit 1220 is configured to receive beam feedback transmitted by the first terminal device over a first resource. The first resource is determined according to first information, the first information being configured to indicate a mapping relationship between a plurality of resources including the first resource and the plurality of transmission beams, and the first information being further configured by the second terminal device to determine the first transmission beam.

Optionally, the plurality of resources are dedicated resources for one or more terminal devices other than the second terminal device to transmit beam feedback to the second terminal device, and the one or more terminal devices include the first terminal device.

Optionally, the plurality of resources include a plurality of feedback occasions (FOs), and the mapping relationship includes that any transmission beam of the plurality of transmission beams corresponds to one or more FOs.

Optionally, the number of the plurality of FOs is greater than the number of the plurality of transmission beams, the plurality of FOs are divided into a plurality of FO groups with the number of the plurality of transmission beams as a period, and any transmission beam of the plurality of transmission beams corresponds to FOs respectively at a same position in the plurality of FO groups.

Optionally, when the number of FOs in a last FO group of the plurality of FO groups is less than the number of the plurality of transmission beams, the FOs in the last FO group are not configured to transmit the beam feedback.

Optionally, the number of the plurality of FOs is determined according to the number of the plurality of transmission beams, and the first information is further configured to indicate that the plurality of transmission beams are in one-to-one correspondence with the plurality of FOs.

Optionally, the plurality of resources include M FOs, M is a natural number greater than 1, the M FOs are configured for N terminal devices other than the second terminal device to transmit beam feedback, N is a natural number greater than 1 and less than M. The number of FOs corresponding to each terminal device of the N terminal devices is further determined according to a service priority of the N terminal devices and/or a communication requirement of the N terminal devices.

Optionally, the number of FOs corresponding to at least two terminal devices of the N terminal devices is different, and the number of FOs corresponding to a terminal device with the highest service priority in the at least two terminal devices is the largest.

Optionally, the number of FOs corresponding to an i-th terminal device of the N terminal devices is represented by kᵢ, i∈[1, 2, ...N]. If ${\sum }_{i = 1}^{N} {k}_{i} > M$*,* a maximum value among k₁ to k_{N} is processed according to a first descending gradient until ${\sum }_{i = 1}^{N} {k}_{i} \leq M$*,* and FOs corresponding to the i-th terminal device may be represented as: {FOₛᵢ, ki}.

FOₛᵢ represents a start position of the FOs corresponding to the i-th terminal device, and ${FO}_{si} = {\sum }_{j = 1}^{i - 1} {k}_{j}$*,* j∈[1,2,...i-1].

Optionally, the number of FOs corresponding to each terminal device of the N terminal devices is adjusted according to a configuration coefficient, the configuration coefficient is related to the service priority of the terminal device, and the FOs corresponding to the i-th terminal device of the N terminal devices is represented as: {FOₛᵢ, αᵢ×H}.

H represents a base number of FOs corresponding to each terminal device of the N terminal devices, αᵢ represents the configuration coefficient of the i-th terminal device, αᵢ is an integer, ${\sum }_{i = 1}^{N} \left({α}_{i}\times H\right) \leq M$, and ${FO}_{si} = {\sum }_{j = 1}^{i - 1} \left({α}_{j}\times H\right)$*,* j∈[1,2,...i-1].

Optionally, the number of FOs corresponding to each terminal device of the N terminal devices is determined by dividing M FOs into N equal parts, and the remaining FOs after the M FOs are divided into the N equal parts are configured for one or more terminal devices each having a priority higher than a first threshold among the N terminal devices.

Optionally, the plurality of resources include one or more dedicated slots for transmitting the beam feedback. Within any slot of the one or more dedicated slots, there are resources occupied by K×X FOs. K represents a number of FOs in a frequency domain, K is a natural number greater than or equal to 1, X represents a number of FOs in a time domain, X is a natural number greater than or equal to 1, and indices of the K×X FOs are in an ascending order in the time domain and/or the frequency domain.

Optionally, the first transmission beam is determined according to an indication of the network device.

Optionally, the beam feedback is associated with one or more of: a sidelink CSI-RS, a PSFCH, and a SCI.

Optionally, the initial beam pairing is performed before the first terminal device and the second terminal device establish the unicast link, and the first information is determined according to the PSFCH. Alternatively, the initial beam pairing is performed after the first terminal device and the second terminal device establish the unicast link, and the first information is determined according to the SCI.

Optionally, the reference signal includes one or more of: an S-SSB, and a sidelink CSI-RS.

FIG. 13 shows a schematic structural diagram of a communication apparatus according to an embodiment of the present disclosure. The dashed line in FIG. 13 indicates that the unit or module is optional. The apparatus 1300 can be configured to implement the method described in the above method embodiments. The apparatus 1300 may be a chip or a terminal device.

The apparatus 1300 may include one or more processors 1310. The processor 1310 can support the apparatus 1300 in implementing the methods described in the above method embodiments. The processor 1310 may be a general-purpose processor or a special purpose processor. For example, the processor may be a central processing unit (CPU). Alternatively, the processor may also be another general-purpose processor, a digital signal processor (DSP), an application specific integrated circuit (ASIC), a field programmable gate array (FPGA), or another programmable logic device, discrete gate or transistor logic, discrete hardware components, or the like. The general-purpose processor may be a microprocessor, or the processor can also be any conventional processor, etc.

The apparatus 1300 may further include one or more memories 1320. The memory 1320 has stored thereon programs, which can be executed by the processor 1310, so that the processor 1310 performs the method described in the foregoing method embodiments. The memory 1320 can be separated from the processor 1310 or can be integrated in the processor 1310.

The apparatus 1300 may further include a transceiver 1330. The processor 1310 can communicate with other devices or chips through the transceiver 1330. For example, the processor 1310 can transmit and receive data with other devices or chips through the transceiver 1330.

The embodiments of the disclosure also provide a computer-readable storage medium for storing programs. This computer-readable storage medium can be applied to the terminal devices or network devices provided in the embodiments of the disclosure, and the program enables the computer to execute the methods performed by the terminal devices or network devices in various embodiments of the disclosure.

The computer-readable storage medium can be any available medium readable by a computer, or a data storage device integrated with one or more available media, such as a server or data center. The available media may be magnetic media (e.g., floppy disks, hard disks, magnetic tapes), optical media (e.g., digital video disc (DVD)), or semiconductor media (e.g., solid-state disk (SSD)).

Embodiments of the disclosure further provide a computer program product. This computer program product includes a program that can be applied to the terminal devices or network devices provided in the embodiments of the disclosure, and the program enables the computer to execute the methods performed by the terminal or network devices in various embodiments of the disclosure.

In the above embodiments, the implementation can be achieved entirely or partially through software, hardware, firmware, or any combination thereof. When implemented through software, it can be realized entirely or partially in the form of a computer program product. The computer program product includes one or more computer instructions. When the computer program instructions are loaded and executed on a computer, they generate the processes or functions described in the embodiments of the disclosure, either entirely or partially. The computer may be a general-purpose computer, a dedicated computer, a computer network, or any other programmable device. The computer instructions may be stored in a computer-readable storage medium or transmitted from one computer-readable storage medium to another. For example, the computer instructions can be transmitted from one website, computer, server, or data center to another website, computer, server, or data center through wired (e.g., coaxial cable, fiber optics, digital subscriber line (DSL)) or wireless (e.g., infrared, wireless, microwave) means.

The embodiments of the disclosure also provide a computer program. This computer program can be applied to the terminal devices or network devices provided in the embodiments of the disclosure, and the computer program enables the computer to execute the methods performed by the terminal or network devices in various embodiments of the disclosure.

In the disclosure, the terms "system" and "network" can be used interchangeably. Additionally, the terminology used in the disclosure is intended to explain the specific embodiments of the disclosure and is not intended to limit the scope of the disclosure. The terms "first," "second," "third," and "fourth" used in the description, claims, and accompanying drawings of the disclosure are for distinguishing different objects and not for describing a specific order. Moreover, the terms "include/comprise" and "have," as well as their derivatives, are intended to cover non-exclusive inclusions.

In the embodiments of the disclosure, the term "indicate" can refer to direct indication, indirect indication, or a relationship of association. For example, if A indicates B, it can mean that A directly indicates B (e.g., B can be obtained through A), or A indirectly indicates B (e.g., A indicates C, and B can be obtained through C), or it can imply an associative relationship between A and B. In the embodiments of the disclosure, determining B based on A does not mean that B is determined solely based on A, and it may also involve determining B based on A and/or other information.

In the embodiments of the disclosure, the term "correspond/corresponding" can indicate a direct or indirect correspondence between two entities, an associative relationship, or a relationship of indication and being indicated, configuration and being configured, etc.

In the embodiments of the disclosure, "predefined" or "preconfigured" can be implemented by pre-saving corresponding codes, tables, or other means that can indicate relevant information within devices (e.g., terminal devices and network devices). The disclosure does not limit the specific implementation methods. For example, predefining can refer to definitions in a protocol.

In the embodiments of the disclosure, the term "protocol" refers to standard protocols in the field of communication, such as LTE protocols, NR protocols, and related protocols applicable to future communication systems. The disclosure does not limit the specific protocols.

The term "and/or" used in the embodiments of the disclosure is merely a description of the relationship between associated objects, indicating that there can be three relationships. For example, A and/or B can mean: A exists alone, A and B exist together, or B exists alone. Additionally, the character "/" in this document generally indicates an "or" relationship between the associated objects before and after it.

In the various embodiments of the disclosure, the order of the processes indicated by the sequence numbers does not imply the order of execution. The execution order of the processes should be determined based on their functions and inherent logic, and shall not limit the implementation of the embodiments of the disclosure.

In the several embodiments provided in the disclosure, it shall be understood that the disclosed systems, devices, and methods can be implemented in other ways. For example, the above-described device embodiments are merely illustrative. The division of the units is merely a logical function division, and the actual implementation may have other division methods. For example, multiple units or components can be combined or integrated into another system, or some features can be ignored or not executed. Additionally, the coupling or direct coupling or communication connection displayed or discussed between each other can be indirect coupling or communication connection through some interfaces, devices, or units, which can be electrical, mechanical, or other forms.

The units described as separate components may or may not be physically separate, and the components displayed as units may or may not be physical units. That is, they can be located in one place or distributed across multiple network units. Depending on the actual needs, some or all of the units can be selected to achieve the objectives of the embodiments of the disclosure.

Furthermore, in the various embodiments of the disclosure, the functional units can be integrated into one processing unit, or each unit can exist physically separately, or two or more units can be integrated into one unit.

The above illustration is only the specific implementation of the disclosure, but the scope of protection of the disclosure is not limited to this. Any changes or substitutions that can be easily conceived by those skilled in the technical field within the technical scope disclosed in the disclosure should be covered within the scope of protection of the disclosure. Therefore, the scope of protection of the disclosure shall be based on the scope of protection of the claims.

## Claims

1. A method for sidelink communication, comprising:
determining, by a first terminal device, a first transmission beam from a plurality of transmission beams of a second terminal device, the first transmission beam being configured for initial beam pairing between the first terminal device and the second terminal device; and
transmitting, by the first terminal device, beam feedback to the second terminal device over a first resource, the first resource being determined according to first information, the first information being configured to indicate a mapping relationship between a plurality of resources including the first resource and the plurality of transmission beams, and the first information being further configured for the second terminal device to determine the first transmission beam.

2. The method of claim 1, wherein the plurality of resources are dedicated resources for one or more terminal devices other than the second terminal device to transmit beam feedback to the second terminal device, and the one or more terminal devices include the first terminal device.

3. The method of claim 1 or 2, wherein the plurality of resources include a plurality of feedback occasions (FOs), and the mapping relationship includes that any transmission beam of the plurality of transmission beams corresponds to one or more FOs.

4. The method of claim 3, wherein a number of the plurality of FOs is greater than a number of the plurality of transmission beams, the plurality of FOs are divided into a plurality of FO groups with the number of the plurality of transmission beams as a period, and any transmission beam of the plurality of transmission beams corresponds to FOs respectively at a same position in the plurality of FO groups.

5. The method of claim 4, wherein in response to a number of FOs in a last FO group of the plurality of FO groups being less than the number of the plurality of transmission beams, the FOs in the last FO group are not configured for transmitting beam feedback.

6. The method of claim 3, wherein a number of the plurality of FOs is determined according to a number of the plurality of transmission beams, and the first information is further configured to indicate that the plurality of transmission beams are in one-to-one correspondence with the plurality of FOs.

7. The method of any one of claims 1 to 6, wherein the plurality of resources include M FOs, M is a natural number greater than 1, the M FOs are configured for N terminal devices other than the second terminal device to transmit beam feedback, and N is a natural number greater than 1 and less than M, wherein a number of FOs corresponding to each terminal device of the N terminal devices is further determined according to a service priority of the N terminal devices and/or a communication requirement of the N terminal devices.

8. The method of claim 7, wherein a number of FOs corresponding to at least two terminal devices of the N terminal devices is different, and a terminal device with a highest service priority among the at least two terminal devices corresponds to a largest number of FOs.

9. The method of claim 8, wherein a number of FOs corresponding to an i-th terminal device of the N terminal devices is represented by kᵢ, i∈[1,2,...N];
wherein in response to ${\sum }_{i = 1}^{N} {k}_{i} > M$, a maximum value among k₁ to k_{N} is processed according to a first descending gradient until ${\sum }_{i = 1}^{N} {k}_{i} \leq M$, and the FOs corresponding to the i-th terminal device is represented as: {FOₛᵢ, kᵢ};
wherein FOₛᵢ represents a start position of the FOs corresponding to the i-th terminal device, and ${FO}_{si} = {\sum }_{j = 1}^{i - 1} {k}_{j}$, j∈[1,2,...i-1].

10. The method of claim 8, wherein a number of FOs corresponding to each terminal device of the N terminal devices is adjusted according to a configuration coefficient, the configuration coefficient is related to the service priority of the terminal device, and the FOs corresponding to the i-th terminal device of the N terminal devices is represented as: {FOₛᵢ, αᵢ×H};
wherein H represents a base number of the FOs corresponding to each terminal device of the N terminal devices, αᵢ represents the configuration coefficient of the i-th terminal device, αᵢ is an integer, ${\sum }_{i = 1}^{N} \left({α}_{i}\times H\right) \leq M$, and ${FO}_{si} = {\sum }_{j = 1}^{i - 1} \left({α}_{j}\times H\right)$, j∈[1,2,...i-1].

11. The method of claim 8, wherein a number of FOs corresponding to each terminal device of the N terminal devices is determined by dividing M FOs into N equal parts, and remaining FOs after dividing the M FOs into the N equal parts are configured for one or more terminal devices each having a priority higher than a first threshold among the N terminal devices.

12. The method of any one of claims 1 to 11, wherein the plurality of resources include one or more dedicated slots for transmitting beam feedback, and within any slot of the one or more dedicated slots, there are resources occupied by K×X FOs, wherein K represents a number of FOs in a frequency domain, K is a natural number greater than or equal to 1, X represents a number of FOs in a time domain, X is a natural number greater than or equal to 1, and indices of the K×X FOs are in an ascending order in the time domain and/or the frequency domain.

13. The method of any one of claims 1 to 12, further comprising:
determining, by the first terminal device, the first transmission beam according to an indication of a network device.

14. The method of any one of claims 1 to 13, wherein the beam feedback is associated with one or more of following:
a sidelink channel state information reference signal (CSI-RS);
a physical sidelink feedback channel (PSFCH); and
sidelink control information (SCI).

15. The method of any one of claims 1 to 14, wherein the initial beam pairing is performed before the first terminal device and the second terminal device establish a unicast link, and the first information is determined according to a PSFCH, or wherein the initial beam pairing is performed after the first terminal device and the second terminal device establish the unicast link, and the first information is determined according to SCI.

16. The method of any one of claims 1 to 15, wherein the plurality of transmission beams are configured to carry reference signals, and each of the reference signals includes one or more of following: an S-SSB and a sidelink CSI-RS.

17. A method for sidelink communication, comprising:
transmitting, by a second terminal device, reference signals through a plurality of transmission beams, the plurality of transmission beams being configured for a first terminal device to determine a first transmission beam, the first transmission beam being configured for the first terminal device to perform initial beam pairing with the second terminal device; and
receiving, by the second terminal device, beam feedback transmitted by the first terminal device over a first resource, the first resource being determined according to first information, the first information being configured to indicate a mapping relationship between a plurality of resources including the first resource and the plurality of transmission beams, and the first information being further configured for the second terminal device to determine the first transmission beam.

18. The method of claim 17, wherein the plurality of resources are dedicated resources for one or more terminal devices other than the second terminal device to transmit beam feedback to the second terminal device, and the one or more terminal devices include the first terminal device.

19. The method of claim 17 or 18, wherein the plurality of resources include a plurality of feedback occasions (FOs), and the mapping relationship includes that any transmission beam of the plurality of transmission beams corresponds to one or more FOs.

20. The method of claim 19, wherein a number of the plurality of FOs is greater than a number of the plurality of transmission beams, the plurality of FOs are divided into a plurality of FO groups with the number of the plurality of transmission beams as a period, and any transmission beam of the plurality of transmission beams corresponds to FOs respectively at a same position in the plurality of FO groups.

21. The method of claim 20, wherein in response to a number of FOs in a last FO group of the plurality of FO groups being less than the number of the plurality of transmission beams, the FOs in the last FO group are not configured for transmitting beam feedback.

22. The method of claim 19, wherein a number of the plurality of FOs is determined according to a number of the plurality of transmission beams, and the first information is further configured to indicate that the plurality of transmission beams are in one-to-one correspondence with the plurality of FOs.

23. The method of any one of claims 17 to 22, wherein the plurality of resources include M FOs, M is a natural number greater than 1, the M FOs are configured for N terminal devices other than the second terminal device to transmit beam feedback, and N is a natural number greater than 1 and less than M, wherein a number of FOs corresponding to each terminal device of the N terminal devices is further determined according to a service priority of the N terminal devices and/or a communication requirement of the N terminal devices.

24. The method of claim 23, wherein a number of FOs corresponding to at least two terminal devices of the N terminal devices is different, and a terminal device with a highest service priority among the at least two terminal devices corresponds to a largest number of FOs.

25. The method of claim 24, wherein a number of FOs corresponding to an i-th terminal device of the N terminal devices is represented by kᵢ, i∈[1,2,...N];
wherein in response to ${\sum }_{i = 1}^{N} {k}_{i} > M$*,* a maximum value among k₁ to k_{N} is processed according to a first descending gradient until ${\sum }_{i = 1}^{N} {k}_{i} \leq M$*,* and the FOs corresponding to the i-th terminal device is represented as: {FOₛᵢ, ki};
wherein FOₛᵢ represents a start position of the FOs corresponding to the i-th terminal device, and ${FO}_{si} = {\sum }_{j = 1}^{i - 1} {k}_{j}$*,* j∈[1,2,...i-1].

26. The method of claim 24, wherein a number of FOs corresponding to each terminal device of the N terminal devices is adjusted according to a configuration coefficient, the configuration coefficient is related to the service priority of the terminal device, and the FOs corresponding to the i-th terminal device of the N terminal devices is represented as: {FOₛᵢ, αᵢ×H};
wherein H represents a base number of the FOs corresponding to each terminal device of the N terminal devices, αᵢ represents the configuration coefficient of the i-th terminal device, αᵢ is an integer, ${\sum }_{i = 1}^{N} \left({α}_{i}\times H\right) \leq M$*,* and ${FO}_{si} = {\sum }_{j = 1}^{i - 1} \left({α}_{j}\times H\right)$*,* j∈[1,2,...i-1].

27. The method of claim 24, wherein a number of FOs corresponding to each terminal device of the N terminal devices is determined by dividing M FOs into N equal parts, and remaining FOs after dividing the M FOs into the N equal parts are configured for one or more terminal devices each having a priority higher than a first threshold among the N terminal devices.

28. The method of any one of claims 17 to 27, wherein the plurality of resources include one or more dedicated slots for transmitting beam feedback, and within any slot of the one or more dedicated slots, there are resources occupied by K×X FOs, wherein K represents a number of FOs in a frequency domain, K is a natural number greater than or equal to 1, X represents a number of FOs in a time domain, X is a natural number greater than or equal to 1, and indices of the K×X FOs are in an ascending order in the time domain and/or the frequency domain.

29. The method of any one of claims 17 to 28, wherein the first transmission beam is determined according to an indication of a network device.

30. The method of any one of claims 17 to 29, wherein the beam feedback is associated with one or more of following:
a sidelink channel state information reference signal (CSI-RS);
a physical sidelink feedback channel (PSFCH); and
sidelink control information (SCI).

31. The method of any one of claims 17 to 30, wherein the initial beam pairing is performed before the first terminal device and the second terminal device establish a unicast link, and the first information is determined according to a PSFCH, or wherein the initial beam pairing is performed after the first terminal device and the second terminal device establish the unicast link, and the first information is determined according to SCI.

32. The method of any one of claims 17 to 31, wherein each of the reference signals includes one or more of following: an S-SSB and a sidelink CSI-RS.

33. An apparatus for sidelink communication, being a first terminal device and comprising:
a determining unit configured to determine a first transmission beam from a plurality of transmission beams of a second terminal device, the first transmission beam being configured for initial beam pairing between the first terminal device and the second terminal device; and
a transmitting unit configured to transmit beam feedback to the second terminal device over a first resource, the first resource being determined according to first information, the first information being configured to indicate a mapping relationship between a plurality of resources including the first resource and the plurality of transmission beams, and the first information being further configured for the second terminal device to determine the first transmission beam.

34. The apparatus of claim 33, wherein the plurality of resources are dedicated resources for one or more terminal devices other than the second terminal device to transmit beam feedback to the second terminal device, and the one or more terminal devices include the first terminal device.

35. The apparatus of claim 33 or 34, wherein the plurality of resources include a plurality of feedback occasions (FOs), and the mapping relationship includes that any transmission beam of the plurality of transmission beams corresponds to one or more FOs.

36. The apparatus of claim 35, wherein a number of the plurality of FOs is greater than a number of the plurality of transmission beams, the plurality of FOs are divided into a plurality of FO groups with the number of the plurality of transmission beams as a period, and any transmission beam of the plurality of transmission beams corresponds to FOs respectively at a same position in the plurality of FO groups.

37. The apparatus of claim 36, wherein in response to a number of FOs in a last FO group of the plurality of FO groups being less than the number of the plurality of transmission beams, the FOs in the last FO group are not configured for transmitting beam feedback.

38. The apparatus of claim 35, wherein a number of the plurality of FOs is determined according to a number of the plurality of transmission beams, and the first information is further configured to indicate that the plurality of transmission beams are in one-to-one correspondence with the plurality of FOs.

39. The apparatus of any one of claims 33 to 38, wherein the plurality of resources include M FOs, M is a natural number greater than 1, the M FOs are configured for N terminal devices other than the second terminal device to transmit beam feedback, and N is a natural number greater than 1 and less than M, wherein a number of FOs corresponding to each terminal device of the N terminal devices is further determined according to a service priority of the N terminal devices and/or a communication requirement of the N terminal devices.

40. The apparatus of claim 39, wherein a number of FOs corresponding to at least two terminal devices of the N terminal devices is different, and a terminal device with a highest service priority among the at least two terminal devices corresponds to a largest number of FOs.

41. The apparatus of claim 40, wherein a number of FOs corresponding to an i-th terminal device of the N terminal devices is represented by kᵢ, i∈[1,2,...N];
wherein in response to ${\sum }_{i = 1}^{N} {k}_{i} > M$, a maximum value among k₁ to k_{N} is processed according to a first descending gradient until ${\sum }_{i = 1}^{N} {k}_{i} \leq M$, and the FOs corresponding to the i-th terminal device is represented as: {FOₛᵢ, kᵢ};
wherein FOₛᵢ represents a start position of the FOs corresponding to the i-th terminal device, and ${FO}_{si} = {\sum }_{j = 1}^{i - 1} {k}_{j} , j ∈ \left[1,2,…i-1\right]$.

42. The apparatus of claim 40, wherein a number of FOs corresponding to each terminal device of the N terminal devices is adjusted according to a configuration coefficient, the configuration coefficient is related to the service priority of the terminal device, and the FOs corresponding to the i-th terminal device of the N terminal devices is represented as: {FOₛᵢ, αᵢ×H};
wherein H represents a base number of the FOs corresponding to each terminal device of the N terminal devices, αᵢ represents the configuration coefficient of the i-th terminal device, αᵢ is an integer, ${\sum }_{i = 1}^{N} \left({α}_{i}\times H\right) \leq M$*,* and ${FO}_{si} = {\sum }_{j = 1}^{i - 1} \left({α}_{j}\times H\right)$, j∈[1,2,...i-1].

43. The apparatus of claim 40, wherein a number of FOs corresponding to each terminal device of the N terminal devices is determined by dividing M FOs into N equal parts, and remaining FOs after dividing the M FOs into the N equal parts are configured for one or more terminal devices each having a priority higher than a first threshold among the N terminal devices.

44. The apparatus of any one of claims 33 to 43, wherein the plurality of resources include one or more dedicated slots for transmitting beam feedback, and within any slot of the one or more dedicated slots, there are resources occupied by K×X FOs, wherein K represents a number of FOs in a frequency domain, K is a natural number greater than or equal to 1, X represents a number of FOs in a time domain, X is a natural number greater than or equal to 1, and indices of the K×X FOs are in an ascending order in the time domain and/or the frequency domain.

45. The apparatus of any one of claims 33 to 44, wherein the determining unit is further configured to determine the first transmission beam according to an indication of a network device.

46. The apparatus of any one of claims 33 to 45, wherein the beam feedback is associated with one or more of following:
a sidelink channel state information reference signal (CSI-RS);
a physical sidelink feedback channel (PSFCH); and
sidelink control information (SCI).

47. The apparatus of any one of claims 33 to 46, wherein the initial beam pairing is performed before the first terminal device and the second terminal device establish a unicast link, and the first information is determined according to a PSFCH, or wherein the initial beam pairing is performed after the first terminal device and the second terminal device establish the unicast link, and the first information is determined according to SCI.

48. The apparatus of any one of claims 33 to 47, wherein the plurality of transmission beams are configured to carry reference signals, and each of the reference signals includes one or more of following: an S-SSB and a sidelink CSI-RS.

49. An apparatus for sidelink communication, being a second terminal device and comprising:
a transmitting unit configured to transmit reference signals through a plurality of transmission beams, the plurality of transmission beams being configured for a first terminal device to determine a first transmission beam, the first transmission beam being configured for the first terminal device to perform initial beam pairing with the second terminal device; and
a receiving unit configured to receive beam feedback transmitted by the first terminal device over a first resource, the first resource being determined according to first information, the first information being configured to indicate a mapping relationship between a plurality of resources including the first resource and the plurality of transmission beams, and the first information being further configured for the second terminal device to determine the first transmission beam.

50. The apparatus of claim 49, wherein the plurality of resources are dedicated resources for one or more terminal devices other than the second terminal device to transmit beam feedback to the second terminal device, and the one or more terminal devices include the first terminal device.

51. The apparatus of claim 49 or 50, wherein the plurality of resources include a plurality of feedback occasions (FOs), and the mapping relationship includes that any transmission beam of the plurality of transmission beams corresponds to one or more FOs.

52. The apparatus of claim 51, wherein a number of the plurality of FOs is greater than a number of the plurality of transmission beams, the plurality of FOs are divided into a plurality of FO groups with the number of the plurality of transmission beams as a period, and any transmission beam of the plurality of transmission beams corresponds to FOs respectively at a same position in the plurality of FO groups.

53. The apparatus of claim 52, wherein in response to a number of FOs in a last FO group of the plurality of FO groups being less than the number of the plurality of transmission beams, the FOs in the last FO group are not configured for transmitting beam feedback.

54. The apparatus of claim 51, wherein a number of the plurality of FOs is determined according to a number of the plurality of transmission beams, and the first information is further configured for indicating that the plurality of transmission beams are in one-to-one correspondence with the plurality of FOs.

55. The apparatus of any one of claims 49 to 54, wherein the plurality of resources include M FOs, M is a natural number greater than 1, the M FOs are configured for N terminal devices other than the second terminal device to transmit beam feedback, and N is a natural number greater than 1 and less than M, wherein a number of FOs corresponding to each terminal device of the N terminal devices is further determined according to a service priority of the N terminal devices and/or a communication requirement of the N terminal devices.

56. The apparatus of claim 55, wherein a number of FOs corresponding to at least two terminal devices of the N terminal devices is different, and a terminal device with a highest service priority among the at least two terminal devices corresponds to a largest number of FOs.

57. The apparatus of claim 56, wherein a number of FOs corresponding to an i-th terminal device of the N terminal devices is represented by kᵢ, i∈[1,2,...N];
wherein in response to ${\sum }_{i = 1}^{N} {k}_{i} > M$, a maximum value among k₁ to k_{N} is processed according to a first descending gradient until ${\sum }_{i = 1}^{N} {k}_{i} \leq M$, and the FOs corresponding to the i-th terminal device is represented as: {FOₛᵢ, ki};
wherein FOₛᵢ represents a start position of the FOs corresponding to the i-th terminal device, and ${FO}_{si} = {\sum }_{j = 1}^{i - 1} {k}_{j}$, j∈[1,2,...i-1].

58. The apparatus of claim 56, wherein a number of FOs corresponding to each terminal device of the N terminal devices is adjusted according to a configuration coefficient, the configuration coefficient is related to the service priority of the terminal device, and the FOs corresponding to the i-th terminal device of the N terminal devices is represented as: {FOₛᵢ, αᵢ×H};
wherein H represents a base number of the FOs corresponding to each terminal device of the N terminal devices, αᵢ represents the configuration coefficient of the i-th terminal device, αᵢ is an integer, ${\sum }_{i = 1}^{N} \left({α}_{i}\times H\right) \leq M$*,* and ${FO}_{si} = {\sum }_{j = 1}^{i - 1} \left({α}_{j}\times H\right)$, j∈[1,2,...i-1].

59. The apparatus of claim 56, wherein a number of FOs corresponding to each terminal device of the N terminal devices is determined by dividing M FOs into N equal parts, and remaining FOs after dividing the M FOs into the N equal parts are configured for one or more terminal devices each having a priority higher than a first threshold among the N terminal devices.

60. The apparatus of any one of claims 49 to 59, wherein the plurality of resources include one or more dedicated slots for transmitting beam feedback, and within any slot of the one or more dedicated slots, there are resources occupied by K×X FOs, wherein K represents a number of FOs in a frequency domain, K is a natural number greater than or equal to 1, X represents a number of FOs in a time domain, X is a natural number greater than or equal to 1, and indices of the K×X FOs are in an ascending order in the time domain and/or the frequency domain.

61. The apparatus of any one of claims 49 to 60, wherein the first transmission beam is determined according to an indication of a network device.

62. The apparatus of any one of claims 49 to 61, wherein the beam feedback is associated with one or more of following:
a sidelink channel state information reference signal (CSI-RS);
a physical sidelink feedback channel (PSFCH); and
sidelink control information (SCI).

63. The apparatus of any one of claims 49 to 62, wherein the initial beam pairing is performed before the first terminal device and the second terminal device establish a unicast link, and the first information is determined according to a PSFCH, or wherein the initial beam pairing is performed after the first terminal device and the second terminal device establish the unicast link, and the first information is determined according to SCI.

64. The apparatus of any one of claims 49 to 63, wherein each of the reference signals includes one or more of following: an S-SSB and a sidelink CSI-RS.

65. A communication apparatus, comprising: a memory and a processor, the memory being configured to store a program, and the processor being configured to invoke the program stored in the memory to perform the method of any one of claims 1 to 32.

66. An apparatus, comprising a processor, configured to invoke a program from a memory to perform the method of any one of claims 1 to 32.

67. A chip, comprising a processor, configured to invoke a program from a memory, to cause a device equipped with the chip to perform the method of any one of claims 1 to 32.

68. A computer-readable storage medium, comprising a program stored thereon, the program causing a computer to perform the method of any one of claims 1 to 32.

69. A computer program product, comprising a program, the program causing a computer to perform the method of any one of claims 1 to 32.

70. A computer program, wherein the computer program causes a computer to perform the method of any one of claims 1 to 32.
